# EUROPEAN PATENT SPECIFICATION

(11) **EP 3 612 449 B1**
(45) Date of publication and mention of the grant of the patent: **18.08.2021**
(21) Application number: 18724326.6
(22) Date of filing: 18.04.2018
(51) Int. Cl.: B65B 11/52, B65B 31/02, B65B 31/04, B65B 41/04, B65B 57/12, B65B 61/06, B65B 41/14, B65B 7/16, B65B 41/12, B65B 43/52, B65B 51/14, B29C 65/18, B29C 65/26, B29C 65/30, B29C 65/74, B29C 65/78, B29C 65/00, B29L 31/00

(54) **TRAY SEALER AND OPERATING METHOD**
TRAYSEALER UND BETRIEBSVERFAHREN
SCELLEUSE DE BARQUETTES ET MODE D'OPÉRATION

(30) Priority: 19.04.2017 IT 201700043164
(43) Date of publication of application: 26.02.2020
(73) Proprietor: Cryovac, LLC, Charlotte, NC 28208 (US)
(72) Inventor: RIZZI, Jvanohe, 20025 Legnano (MI) (IT); BENEDETTI, Giulio, 21048 Solbiate Arno (VA) (IT); CERANI, Luca, 20149 Milano (IT)
(74) Representative: PGA S.p.A., Milano, Succursale di Lugano
(86) International application number: PCT/IB2018/052674
(87) International publication number: WO 2018/193383

(56) References cited:
- EP-A1- 3 272 658
- WO-A1-2014/166940
- WO-A1-2014/180823
- WO-A1-2015/091404
- US-A- 3 505 781
- US-A- 4 583 348
- US-A- 5 603 198

## Description

### FIELD OF THE INVENTION

The present invention refers to a process and apparatus for packaging products. Specifically, the invention refers to processes and apparatuses using a support, destined to receive a product, and a plastic film destined to be coupled to the support for closing the product in a package. The invention can find application in the vacuum or modified atmosphere packaging of products of various kinds.

### STATE OF THE ART

In the packaging field, apparatuses and associated methods for vacuum-packaging or modified-atmosphere packaging products are known: among these, processes making packages by plastic films for closing food, such as for example meat and fish to be frozen, cheese, treated meat, ready meals, and similar food are known.

The vacuum-packaging process is substantially a thermoforming process comprising providing a product (food) inside or above a rigid or semi-rigid support, for example defined by a flat tray, or a bowl or a cup. The support and the associated product are disposed inside a vacuum chamber. Inside the chamber, a thermoplastic film is sealed to an upper edge of the support; then the air present in the package is extracted so that the plastic film can adhere to the product disposed inside the support.

In order to remove the air from the packages during the forming step, several packaging processes and associated apparatuses are known.

For example, patent US7712289B2 comprises a packaging station wherein an upper tool and a lower tool are apposed to each other for forming a closed chamber, from which air is suctioned before coupling a plastic film to the underlying tray. The plastic film is separated from a continuous film by a cutter housed inside the packaging station and by a stop plate which, during the cutting step, holds the film against the upper tool.

A second known solution, which is particularly useful for making packages wherein the product vertically projects from the tray, is described in the international patent application WO2015/091404 presenting an upper tool of a packaging station capable of varying its own geometry by forming cavities of different sizes. A suctioning system is configured for acting on the upper tool for attracting a portion of a plastic film inside the upper tool itself, while a blocking frame holds a portion of the film itself. In a second step, the upper tool is approached the lower tool wherein at least one tray with an associated product is housed. Lastly, a vacuum system enables to suction air between the film and tray for obtaining a vacuum-packaging of the product housed on the tray.

In order to have an augmented suction of the air present between the film and tray, the systems described in publications WO2009/141214 and WO2014/060507 wherein the tray is provided with a hole enabling to efficiently extracting air from the package during the forming step, are also known.

A third known solution, described in the U.S. patent application No. US 3,505,781 A, is directed to a packaging apparatus comprising a packaging station configured to receive, between an upper and lower tools, one or more supports and a closure film. The upper and lower tools are configured to seal the film on the support to define packages.

The closure film is in form of an unrolled continuous film which is gripped by a couple of opposed movable jaws configured to bring the film, from a position outside the packaging station, to inside of the latter.

### OBJECT OF THE INVENTION

Purpose of the present invention is therefore to substantially solve at least one of the drawbacks and/or limitations of the previous solutions.

A first object of the invention consists of providing a process and apparatus for packaging capable of obtaining an augmented level of the air removed from the package during the forming step.

In addition, it is an object of the invention to provide a process and an apparatus for packaging which are capable of reducing at a minimum the waste of material, particularly by limiting the amount of plastic film to be wasted.

An ancillary object of the invention consists of offering a process and apparatus for packaging which, while achieving an efficient removal of air, do not require to puncture the support which can be in the shape of a flat support or a tray.

A further object of the invention consists of providing an apparatus and process enabling to make packages for products markedly vertically projecting with respect to the support edge, without compromising the simplicity of the apparatus and of the associated packaging process. In addition, it is a further object of the invention to obtain a process and apparatus which, while satisfying the above-mentioned requirements, are anyway capable of being efficiently used also for packaging products which do not project or do not excessively project from the support.

Another ancillary object of the invention consists of providing an apparatus and process for packaging capable of safely operating and particularly meeting the object of removing air without compromising the appearance of the packaged final product.

One or more of the above described objects, which will better appear in the following description, are substantially met by an apparatus and process for packaging products according to what expressed in one or more of the attached claims and/or the following aspects, taken alone or in any combination thereof or in combination with anyone of the enclosed claims and/or in combination with any of the further aspects or features described below.

### BRIEF DESCRIPTION OF THE DRAWINGS

Some embodiments and some aspects of the invention will be described in the following with reference to the attached drawings, given only in an indicative and therefore non-restrictive way, wherein:
- Figures from 1 to 3 are schematic views of embodiment variants of a packaging apparatus wherein a film is supplied - from a supplying source - to a packaging station of the same apparatus wherein the film is heat-sealed to a tray;
- Figure 4 is a schematic view of an embodiment variant of a packaging apparatus wherein a film is precut outside a packaging station of the same apparatus, and wherein said precut sheet is heat-sealed to a tray;
- Figures 5 and 6 are further schematic views of a packaging apparatus, according to the present invention, disposed in an operative condition, wherein a film unwound from a supplying source is stably held at a packaging station;
- Figures 7 and 8 are respective detailed views of the packaging apparatus in Figures 5 and 6;
- Figure 9 is a detailed view of a packaging apparatus according to the present invention disposed in a further operative condition wherein a film unwound from a reel supplying source, is engaged by a first gripping member;
- Figure 10 is a lateral schematic view of a packaging apparatus according to the present invention, wherein a film unwound from a supplying source, is pulled by a second gripping member;
- Figure 10A is a detailed view of the apparatus of Figure 10;
- Figure 11 is a perspective view of a packaging apparatus according to the present invention, wherein a film unwound from a supplying source is pulled by a second gripping member;
- Figures from 11A to 11C are detailed views of the apparatus of Figure 11;

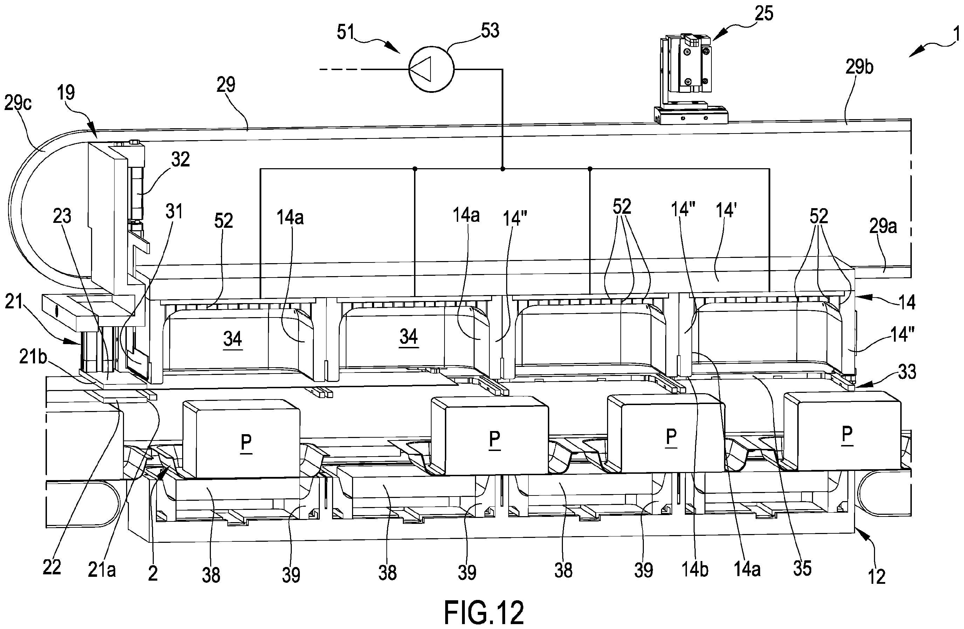

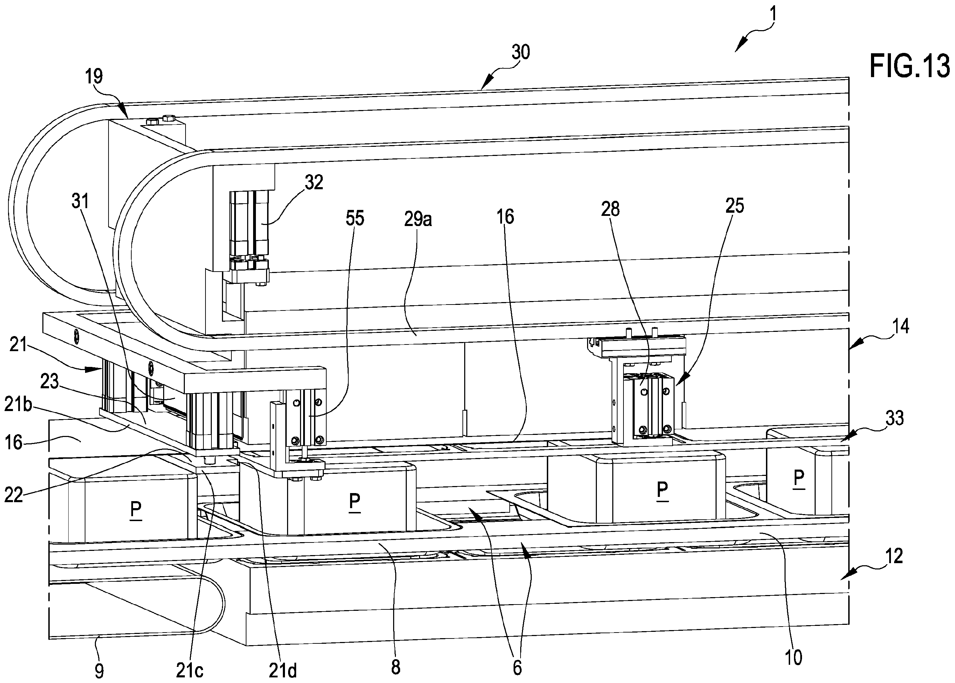

- Figures 12 and 13 are further schematic views of a packaging apparatus according to the present invention wherein the film unwound from a supplying source, is pulled by a second gripping member;
- Figures 14 and 15 are schematic views of a packaging apparatus according to the present invention, wherein a film unwound from a supplying source, is engaged with an upper tool of a packaging station;
- Figure 16 is a detailed view of a packaging apparatus wherein a film is engaged with an upper tool of the packaging station and is cut for defining a film portion;
- Figures from 17 to 20 are schematic views of a first embodiment of a packaging station illustrated in different operative conditions;
- Figures from 21 to 23 are respective schematic views of a second embodiment of a packaging station illustrated in different operative conditions;
- Figure 24 is perspective view of a movement device of a packaging apparatus according to the present invention;
- Figure 25 is a detailed view of the movement device in Figure 24;

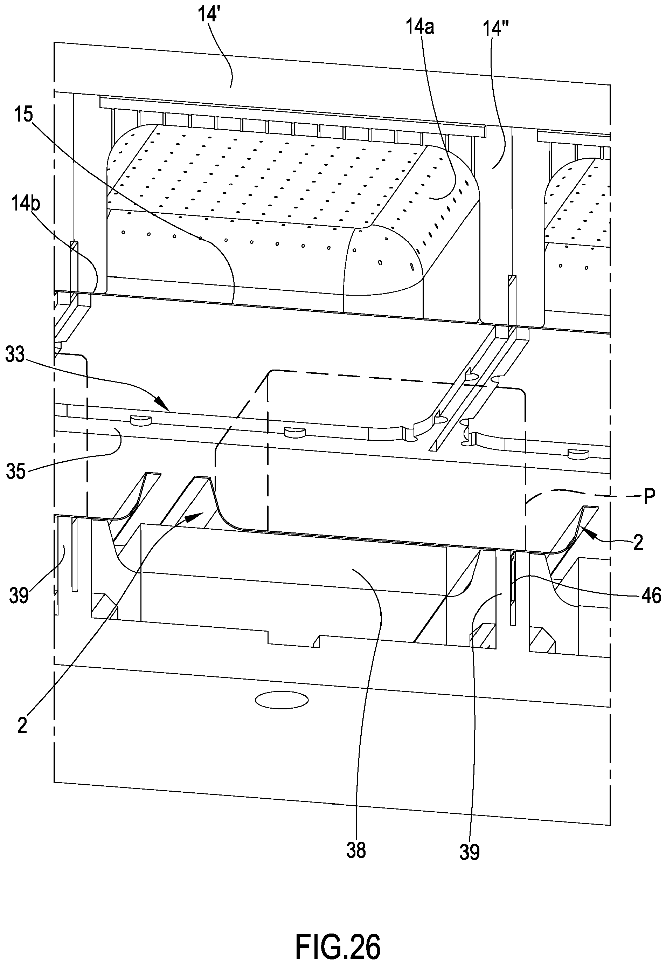

- Figure 26 is a perspective detailed cross-section view of a packaging apparatus;

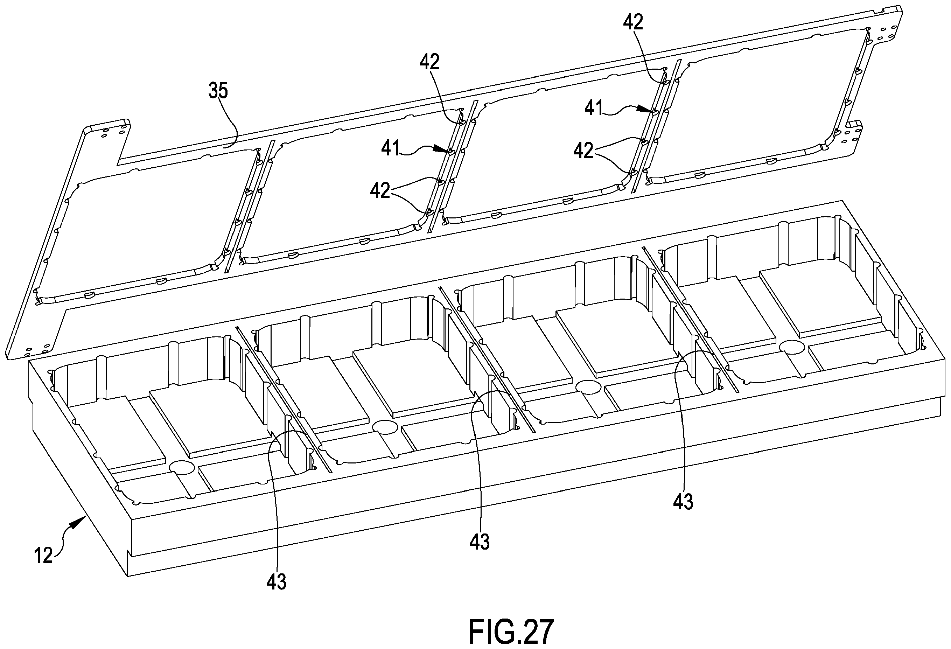

- Figure 27 is a perspective view of a lower tool and a stop element of a packaging apparatus;
- Figures from 28 to 33 are schematic views of a further embodiment variant of a packaging apparatus according to the present invention wherein a film is supplied to a packaging station of the same apparatus wherein the film is heat-sealed to a flat support.

### CONVENTIONS

It is observed, in the present detailed description, that corresponding parts illustrated in the several figures are indicated by the same numeral references. The figures could illustrate the object of the invention by not-to-scale representations; therefore, parts and components illustrated in the figures, regarding the object of the invention, could only refer to schematic representations.

### DEFINITIONS

### Product

The term product P means an article or a composition of articles of any type. For example, the product can be of a food-type and can be at a solid, liquid or gel state, in other words as two or more of the said aggregation states.

### Support

The term support 2 means both a flat support and a tray comprising at least one base 2a and at least one lateral wall 2b emerging from the external perimeter of the base 2a and optionally a terminal flange 2c radially emerging outwardly from the upper perimetral edge of the lateral wall 2b; the support defines an upper surface on which a product P abuts and/or a volume inside which the product can be housed.

The tray 2 can comprise an upper edge portion radially emerging from a free edge of the lateral wall opposite to the base: the upper edge portion emerges from the lateral wall according to a direction exiting the volume of the tray itself.

The flat support can be in any shape, for example, rectangular, diamond, circular, or elliptical; analogously, the tray with a lateral wall can exhibit a base of any shape, for example rectangular, diamond, circular or elliptical. The tray can be formed by a specific manufacturing process distinct from the packaging process or can be made in-line with the packaging process.

The support can be made at least partially of a paper sheet material. The term paper material means paper or paperboard; particularly, the sheet material useable for manufacturing the support can exhibit a grammage comprised between 30 and 600 g/m², particularly comprised between 35 and 300 g/m², still more particularly between 50 and 250 g/m². The considered paper material extends between a first and second prevalent development surfaces. The sheet paper material used for manufacturing the support can, in an embodiment variant thereof, be covered, for at least part of the first and/or second prevalent development surfaces by a coating of plastic material, for example a food-grade film. If the coating is disposed in order to cover at least partially the first prevalent development surface, the coating itself will define an internal or upper surface of the support. Viceversa, if the coating is disposed on the second prevalent development surface, the coating itself will define an external or lower surface of the support. The coating can be thermally treated in order to act as an element for engaging and fixing portions of the support. Moreover, the coating can be used for defining a kind of water and/or moisture barrier useful to avoid to weaken the tray and to prevent a loss of structurality thereof with a following uncontrolled deformation of the paper material forming this latter component.

Advantageously, although in a non-restrictive way, the coating could comprise an extrusion-coating on one or both (internal and/or external sides) of the paper material defining the support with thicknesses which can vary from 10 to 50 µm of a coating material (in other words, polythene). The plastic material of the coating can be for example selected among at least one of the following materials: LDPE, HDPE, PP, PE, PET.

Alternatively, the support can be made at least partially of mono-layer and multi-layer thermoplastic materials. Preferably, the support is provided with gas barrier properties.

Preferably, the support is made of a multi-layer material comprising at least one gas barrier layer, and at least one heat-sealable layer for enabling to seal the coating film to the surface of the support.

Additional layers, such as adhesive layers, for better adhering the gas-barrier layer to adjacent layers, can be present in the gas barrier material for the support, and are preferably present particularly based on specific resins used for the gas barrier layer. For a multi-layer structure, a portion thereof can be formed as a foam. An easily-openable frangible layer can be placed adjacent the heat-sealable layer for making easier to open the final package. The overall thickness of the support typically will reach, although in a non-restrictive way, 5.00 mm, preferably will be comprised between 0.04 and 3.00 mm, and more preferably between 0.05 and 1.50 mm, still more preferably between 0.15 and 1.00 mm.

The support can be integrally made of a paper material (optionally the coating is of a plastic material film) or can be integrally made of a plastic material. In a further embodiment variant, the support is made at least partially of paper material and at least partially of a plastic material; particularly, the support is internally made of a plastic material and externally coated at least partially by a paper material.

### Actuator

The term actuator means any device capable of receiving a command from a control unit and capable of causing a movement on a body. The actuator can be of an electric, pneumatic, mechanical (a spring, for example), type or also of any other type.

### Control unit

The apparatus, herein described and claimed, comprises at least one control unit adapted to control the operative conditions implemented by the apparatus itself. Clearly, the control unit can be only one unit or can be formed by a plurality of distinct control units according to design choices and operative needs.

The term control unit means an electronic-type component which can comprise at least one of: a digital processor (CPU), a memory (or memories), an analog-type circuit or a combination of one or more digital processing units with one or more analog-type circuits. The control unit can be "configured" or "programmed" for executing some steps: this can be physically obtained by any means enabling to configure or program the control unit. For example, if a control unit comprises one or more CPUs and one or more memories, then one or more programs can be stored in suitable memory banks connected to the CPU or CPUs; the program or programs contain instructions which, when are executed by the CPU or CPUs, program or configure the control unit for executing the operations described with reference to the control unit. Alternatively, if the control unit is or comprises an analog-type circuitry, then the circuit of the control unit can be designed to include a circuitry configured, in use, for processing electric signals for executing the steps regarding the control unit. The control unit can comprise one or more digital units, for example of a microprocessor-type, or one or more analog units, or a suitable combination of digital and analog units; the control unit can be configured for coordinating all the actions necessary for executing an instruction and a set of instructions.

### Skin or film

A skin or film of plastic material is applied to the supports, particularly a polymeric one, in order to obtain a package fluid-tightly housing the product. Since the object consists of obtaining a vacuum package, the film applied to the support is typically a flexible multi-layer material comprising at least one first external heat-sealable layer capable of being sealed to the internal or upper surface of the support, optionally a gas barrier layer and a second heat-resistant external layer.

Since another object consists of obtaining a modified-atmosphere package (MAP) or a natural-atmosphere package (*lidding*), the film applied to the support (the film of plastic material, particularly a polymeric one) is typically of a mono-layer or multi-layer type, having at least one heat-sealable layer, possibly capable of heat-shrinking due to the heat. Moreover, the applied film can comprise at least one gas barrier layer and optionally a heat-resistant external layer.

### DETAILED DESCRIPTION

### Packaging apparatus 1

With reference to the attached drawings, 1 generally indicates a packaging apparatus. The apparatus 1 is used for packaging products P of different kind (food products or of any other kind, for example) disposed on a support 2 acting as a holder and/or container for the product P itself. Even though the attached figures show a single product correspondingly associated to each support 2, it is not excluded the possibility of disposing plural products P on a single support and then of packaging them by the apparatus 1, in a single package. The attached figures illustrate, in a non-restrictive way, an apparatus 1 used for vacuum-packaging products. However, it is not excluded the possibility of using the apparatus 1 for performing packaging processes of any other type, for example, under a modified-atmosphere or of another type.

The apparatus 1 comprises a supporting frame 3 acting as a base for several components of the apparatus itself. The supporting frame 3 can comprise a single structure constrained to the ground or more structures constrained to the ground and juxtaposed to each other. As it is visible in the attached figures, the supporting frame 3 can, for example, exhibit a horizontally elongated shape supporting a conveyor 4 configured for moving one or more supports 2 along a predetermined advancement direction A. The particular structure of the conveyor 4 for the supports can be of a different type, however capable of enabling to move the supports themselves to the interior of the packaging station 5. For example, the conveyor 4 can comprise an inlet belt or another conveying member 9 which, actuated according to a step-by-step motion is capable of exhibiting a predetermined number of supports at the inlet of the packaging station 5 wherein one or more suitable members transfer the supports to the interior of the station 5 itself and, once completed the packaging cycle, move the finished packaged towards a further outlet belt or conveying member 11.

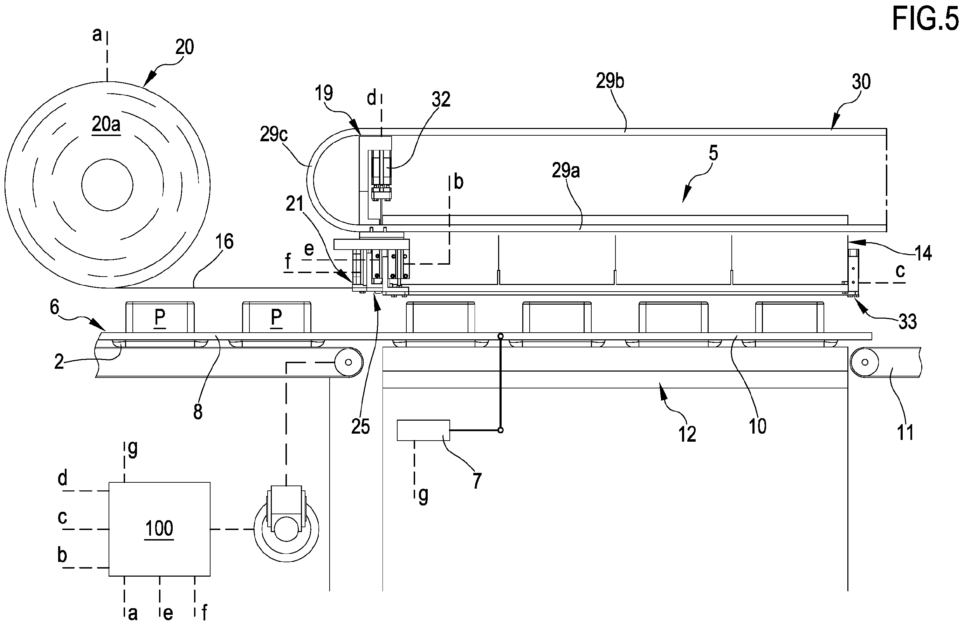

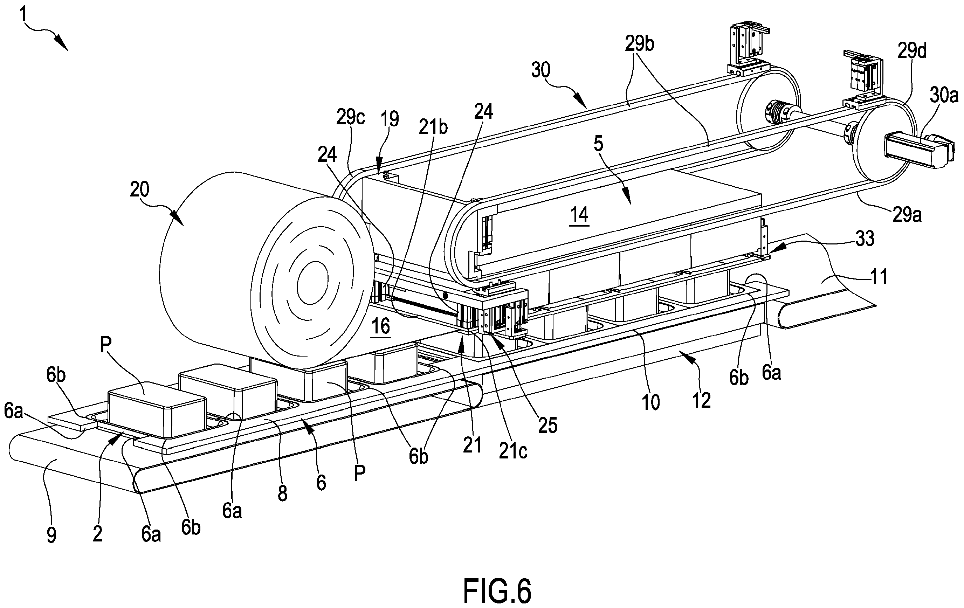

Figures 5 and 6 illustrate an embodiment of the conveyor 4 adapted to move the trays 2 (not flat supports), this conveyor 4 can comprise a guiding structure 6 longitudinally extending along the advancement direction A having a length greater than the extension, along the same advancement direction A, of the packaging station 5. In the illustrated example, at least two of such guiding structures 6 are provided, each being provided with a plurality of thrusting elements 6a (for example, defined by recesses 6b defined on an edge of each guiding structure 6) which are provided to act on a respective side of the trays 2 to be moved. Each recess 6b, in other words each thrusting element 6a of each guiding structure 6, receives a portion of a respective tray 2 so that - when the guiding structure is moved along the advancement direction A - the trays 2 can follow the movement imparted to the guiding structure itself. As said, since there are preferably two opposite guiding structures 6 and each active on a respective side of the packaging station 5, the trays 2 can be stably moved by the thrusting elements 6a along the advancement direction A: substantially, the pitch between following thrusting elements (or between following recesses) of each guiding structure is determined by the size of the trays and by the mutual distance between following trays so that the trays 2 precisely abut against the thrusting elements 6a, in other words the recesses 6b; it is further observed that each guiding structure 6 preferably exhibits the shape of an elongated flat plate wherein one or more thrusting elements (or one or more recesses countershaped to the side of the trays) are provided in a number, for example, at least twice the number of trays 2 to be moved to the interior of the packaging station 5 during each packaging cycle, in order to load into the packaging station 5 a predetermined number of trays and simultaneously in order to unload from the station 5 itself a corresponding number of finished packages. Each guiding structure 6 is moved by a respective positioning actuator 7 (Figure 5): as it will be better described in the following, the motion imparted to each guiding structure 6 is synchronous with the different steps of the packaging cycle. It can be provided a single guiding structure 6 active on only one side and moved by a single positioning actuator 7 or can be provided two guiding structures each moved by a respective positioning actuator or both by a single positioning actuator. Each guiding structure 6, besides moving along the advancement direction A, can be provided with a movement transversal to such advancement direction A for enabling, once completed a forward stroke of each guiding structure, to disengage the trays and finished packages in order to return to the starting position wherein the guiding structure itself engages new trays to be moved to the interior of the packaging station 5. As it is visible in Figures from 6 to 9, the guiding structure/s 6 exhibit a front portion 8 having a predetermined number of recesses or thrusting elements 6a: the front portion 8 of each guiding structure 6 withdraws a respective predetermined number of trays (for example four if there are four packages to be made for each cycle) from an inlet belt or another conveying member 9 and moves them to the interior of the packaging station 5. In the same instant, a rear portion 10 of the guiding structure/s 6 exhibits the same number of recesses 6b or thrusting elements 6a and provides to move the same number of finished packages towards an outlet belt of another conveying member 11.

To summarize, the trays 2, which can be preformed or in-line formed from a respective band material, are conveyed by means of the inlet conveying means 9 to arrive in proximity of the packaging station 5, and then are withdrawn by means of the front portion 8 of the guiding structure 6 and are moved by this latter to the interior of the packaging station 5 for forming finished packages; meanwhile, the same number of finished packages are moved by the rear portion 10 of the guiding structure 6 towards the outlet conveying member 11. Therefore, the guiding structures 6 are disengaged from the trays and finished products, enabling to execute the effective packaging cycle and avoiding to interfere with the components of the packaging station 5, even though they return to a start position by a motion opposite to the advancement direction A of the trays 2.

If there are a plurality of supports to be moved into the packaging station 5, the apparatus can comprise a conveyor 4 as hereinbefore described, or a system for laterally dragging one more supports 2 active on the side of the support/supports and grippingly acting on the lateral edge of these latter.

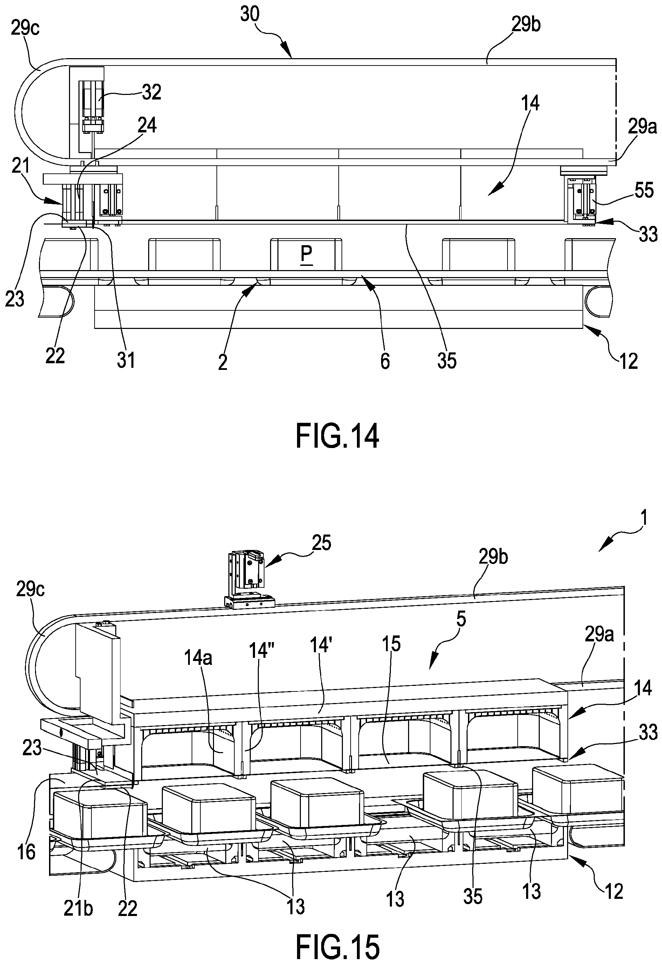

In order to perform the packaging cycle, the packaging station 5 exhibits a lower tool 12 configured for receiving one or more of said supports 2, as it will be better described in the following, the lower tool 12, in a first embodiment, can comprise one or more seats 13 adapted to receive one or more trays (see Figure 15, for example); in such configuration, the front portion 8 of the guiding structure 6 aligns the trays with the seats 13 present in the lower tool 12.

In a second embodiment, the lower tool 12 can comprise a plate, without seats, configured for abuttingly receiving and bearing the flat support (see Figures from 28 to 33); in such configuration, the lower tool 12 can comprise a plate exhibiting a width substantially equal to or greater than the width of the flat support; it is observed that the widths are measured perpendicular to the advancement direction A of the supports 2.

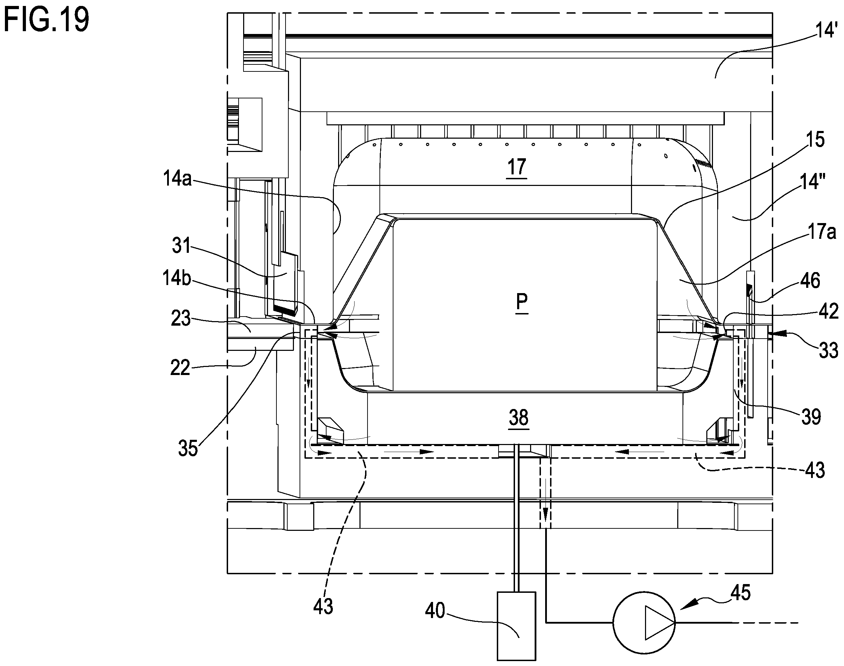

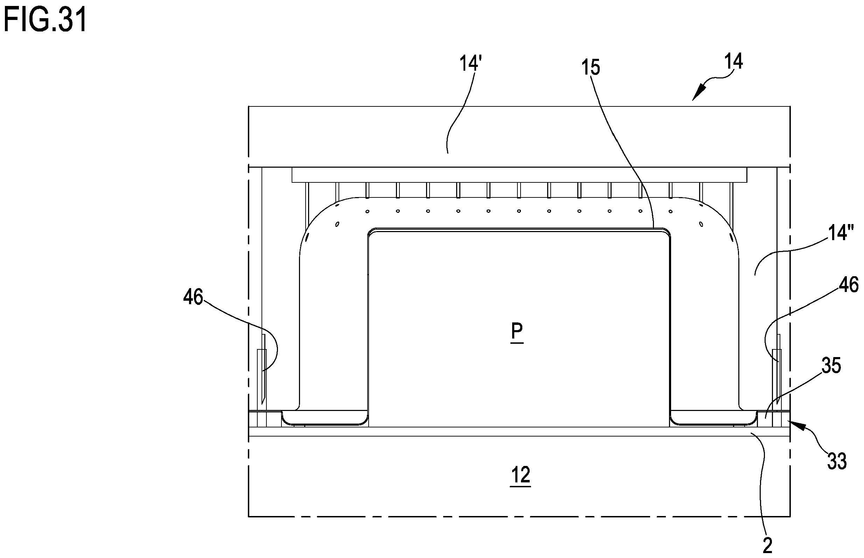

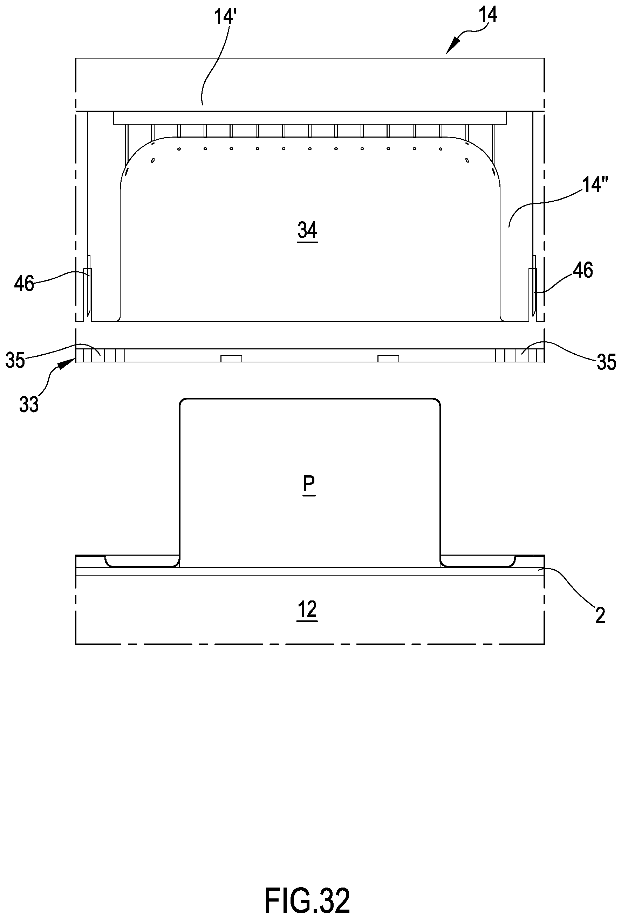

Moreover, the packaging station 5 comprises an upper tool 14 configured for receiving at least one portion 15 of the film 16 (typically completely made of a plastic material or comprising one or more layers of plastic material, as previously described) to be associated to said one or more supports for obtaining the finished packages. It is observed that the upper tool 14 and lower tool 12 are movable with respect to each other between at least one distanced condition (the condition illustrated in Figures from 1 to 6 and 29, for example), at which the lower tool and upper tool enable the film portion 15 and the tray/trays 2 to enter the packaging station 5, and at least one approached condition (illustrated in Figures 19, 20, 22, 23, 30 and 31, for example), at which at least one packaging chamber 17 is defined. The packaging chamber 17 is for example of a fluid-tight type, in other words is put in communication with the environment outside the chamber 17 itself only through conduits controlled by the apparatus 1. The apparatus 1 comprises a main actuator 18, for example borne by the supporting frame 3, active on the upper tool 14 and/or on the lower tool 12 and configured for moving the upper tool and lower tool with respect to each other between said distanced condition and said approached condition in order to selectively open and close the packaging station 5. Figures from 1 to 4 illustrate a non-restrictive embodiment of the invention, wherein both the apparatus 1 provides a main actuator 18 for the lower tool 12, and a respective main actuator 18 for the upper tool 14: under such condition, the tools 12 and 14 are both movable with respect to the supporting frame 3 of the apparatus 1. However, it is not excluded the possibility of providing just one main actuator 18 associated only to the upper tool 14 or only to the lower tool. In a preferred embodiment of the invention, the actuator 18 is only associated to the lower tool 12 so that this latter can move with respect to the upper tool 14, stationary with respect to the supporting frame 3.

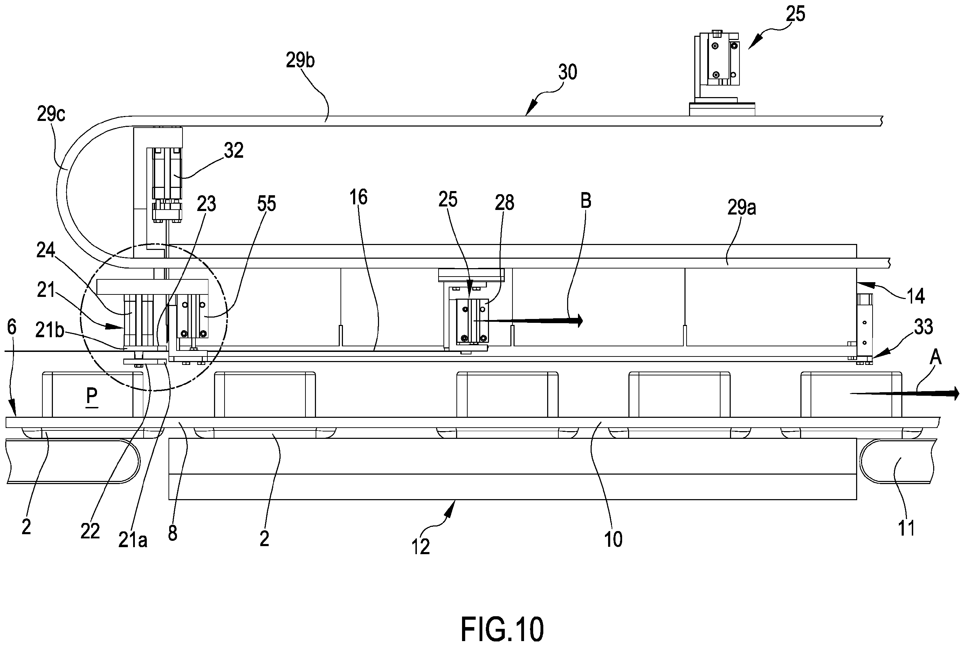

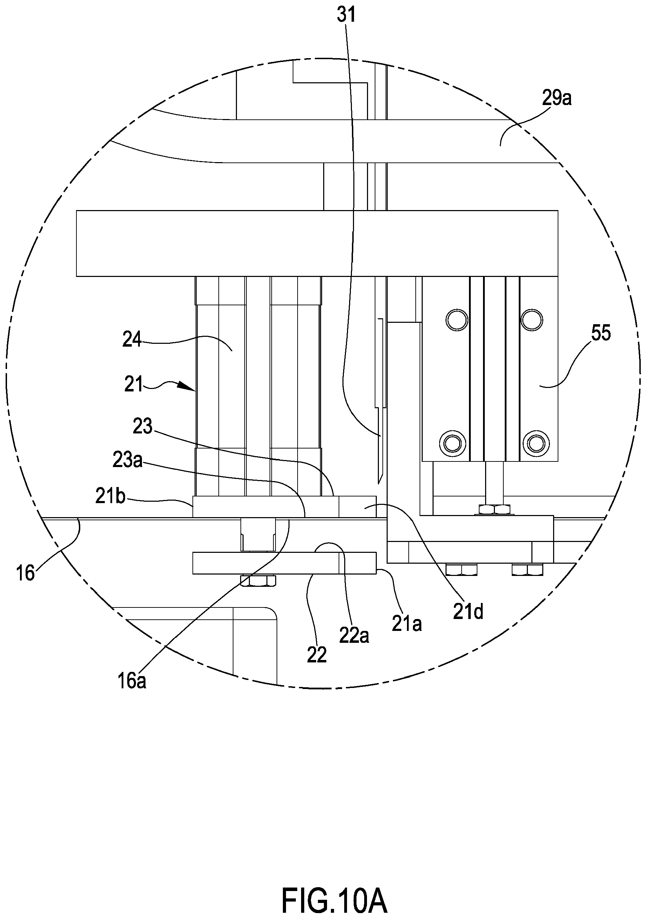

Then, it is provided a movement device 19 for receiving the film portion 15 from a source 20 for supplying the continuous film 16, and for positioning such film portion in the upper tool 14: particularly, as it is visible in the attached figures, the movement device 19 is configured for withdrawing the film portion from an inlet area to the packaging station 5, and for moving such film portion 15 to the interior of the station 5 and below the upper tool 14, arriving to a position wherein the film portion 15 is overlapped the support or supports the guiding structure 6 has positioned in the lower tool 12. The movement device 19 exhibits at least one first gripping member 21 configurable between a respective closed condition, wherein such first gripping member 21 grippingly acts on said film 16, and a respective opened condition wherein such first gripping member 21 does not act on said film. As it is visible from the attached drawings (see Figures 5, 6 and 10), the first gripping member 21 exhibits, in turn, a lower plate 22 and an upper plate 23 movable with respect to each other for defining the opened condition (Figure 10) of the first gripping member 21, wherein the upper plate is distanced from the lower plate in order to enable a free passage of the film 16 or film portion 15, and the closed condition (see Figure 14, for example) of the first gripping member 21, wherein the upper plate 23 is apposed to the lower plate 22 for grippingly closing at least one transversal band 16a of the film; a first gripping actuator 24 is active on at least one between the lower plate 22 and upper plate 23 of the first gripping member 21 for moving such plates between the respective opened and closed conditions of the first gripping member 21: for example the first actuator 24 can be borne by the upper tool 14 and can be active on the upper plate 23, while the lower plate 22 can be fixed to the upper tool itself.

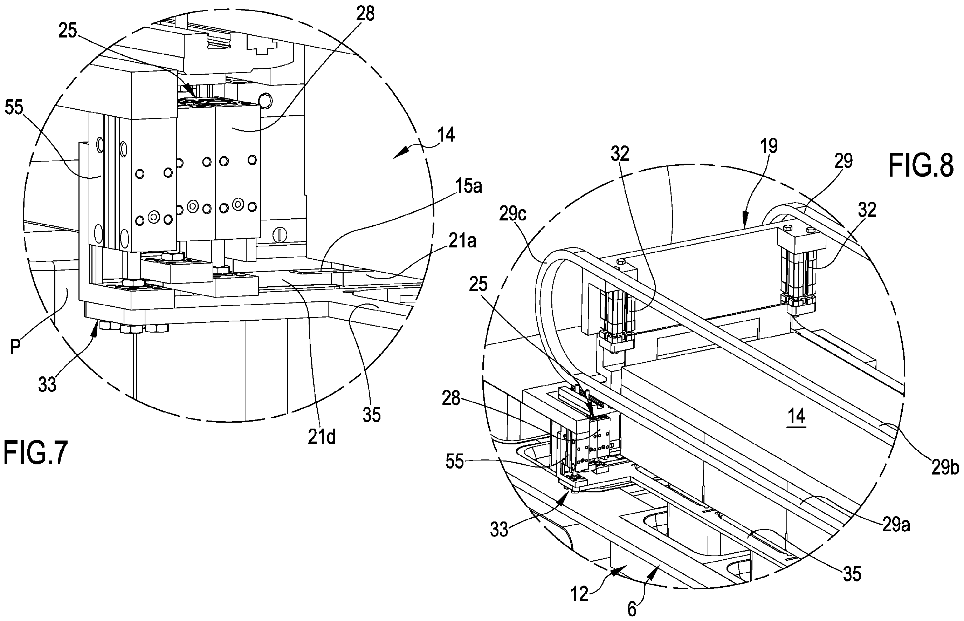

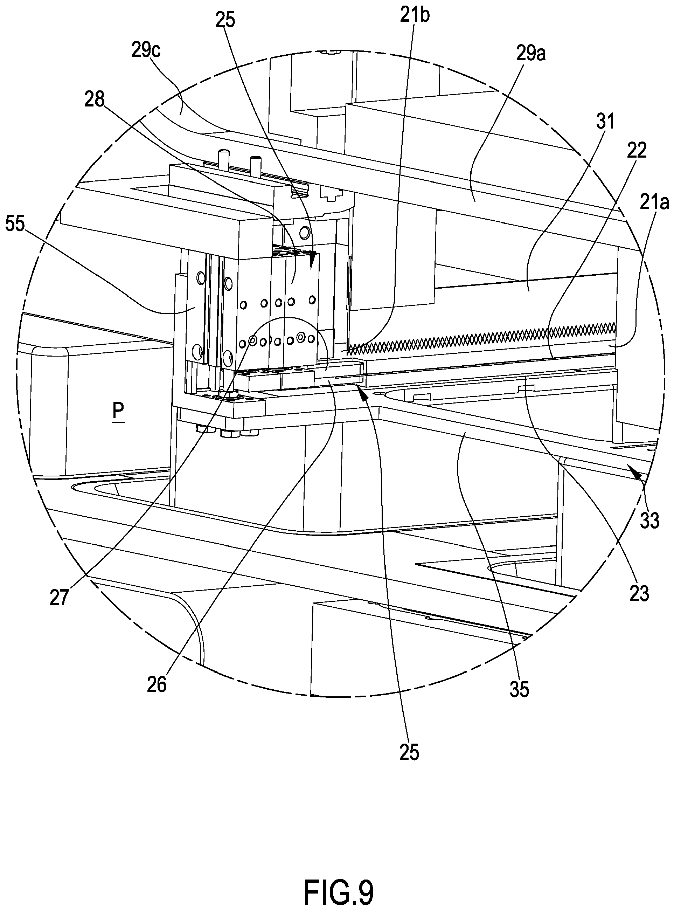

Moreover, the movement device 19 comprises at least one second gripping member 25 also configurable between a respective closed condition, wherein such second member grippingly acts on said film (particularly of said film portion 15), and a respective opened condition, wherein such second member 25 does not grippingly act on said film. For this purpose, the second gripping member 25, shown in the attached drawings, comprises a lower clamp 26 and an upper clamp 27 relatively movable between the opened condition (Figure 7) of the second gripping member, wherein the upper clamp is distanced from the lower clamp for enabling a free passage of the film 16 or of the film portion 15, and the closed condition (Figure 9) of the second gripping member, wherein the upper clamp is apposed to the lower clamp for grippingly closing at least one edge 15a of the film portion 15. At least one second gripping actuator 28 is active on at least one between the lower clamp and upper clamp of the second gripping member 25 for moving such clamps between the respective opened and closed condition of the second gripping member. For example, the second gripping actuator 28 can be carried by the upper tool 14 and can be active on the upper clamp 27, while the lower clamp 26 can be vertically stationary with respect to the upper tool itself.

In order to enable to position the film portion 15 below the upper tool, the second gripping member 25 is also movable with respect to the first gripping member along an advancement direction B of the film 15, 16. More particularly, the conveyor 4 and movement device 19 are configured so that the advancement direction A of the supports is horizontal and parallel to the advancement direction B of the film portion 15 or film 16 (see Figure 10, for example). However, it is not excluded the possibility of supplying the film 16 in a different advancement direction, for example perpendicular to the advancement direction A of the supports.

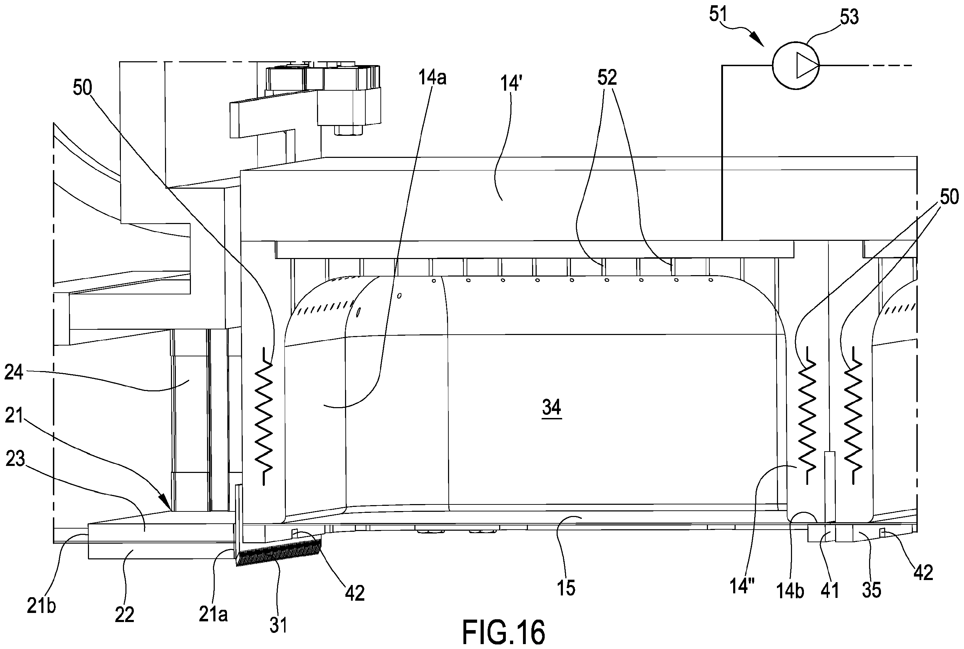

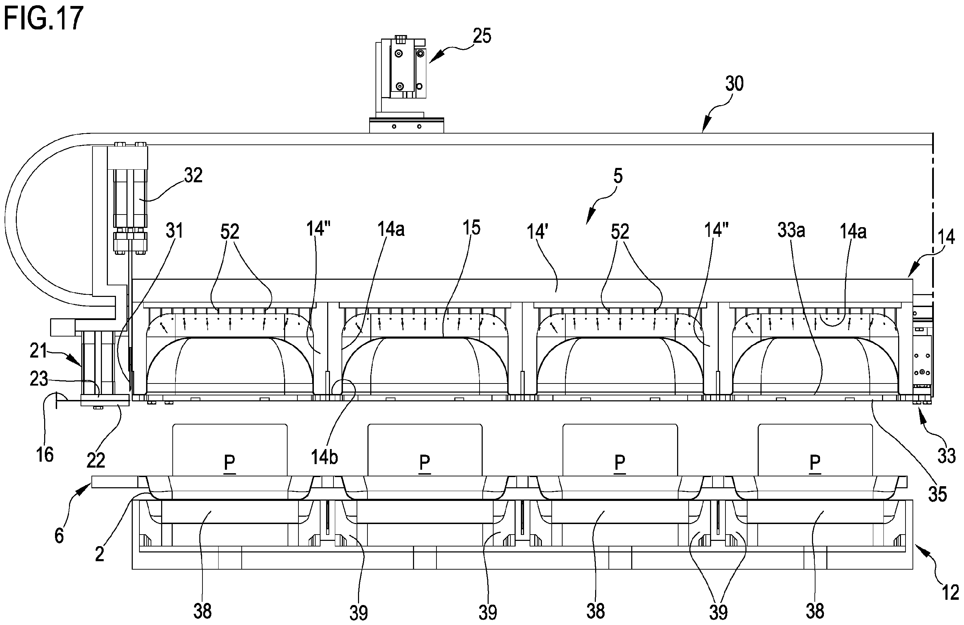

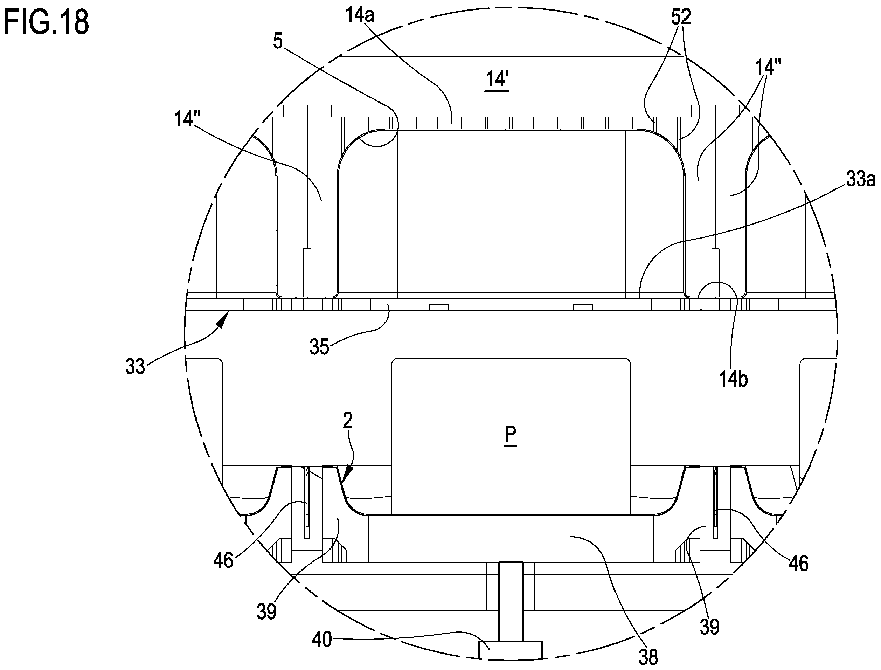

More particularly: the second gripping member 25 is movable between a first position, wherein the second gripping member is apposed to the first gripping member 21 (see Figures 5 and 6, for example), and a second position (see Figure 14, for example), wherein the second gripping member 25 is distant a predetermined operative stroke C from the first gripping member 21. Such predetermined operative stroke C has an extension sufficient to position the film portion 15 below the overall active surface of the upper tool 14. Therefore, the second gripping member 25, due to the movement away from the first gripping member 21, suitably positions the film portion 15 below the upper tool so that a cutter 31 (better illustrated in the following), for example also borne by the upper tool or lower tool or by the supporting frame, can cuttingly act for separating the film portion 15 from the continuous film 16 (this condition is outlined in Figure 16). In this configuration, the second gripping member 25 is movable along the stroke C downstream of the first gripping member 21 according to the direction to the advancement direction B of the film 16.

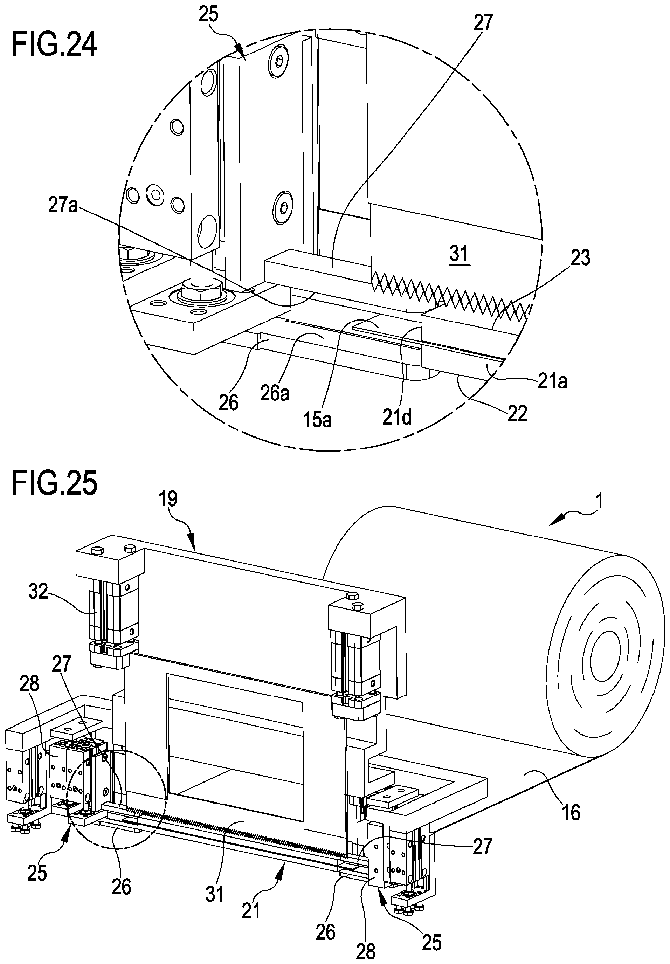

As already described, in the closed condition of the second gripping member 25, the upper clamp 27 is apposed to the lower clamp 26 for grippingly closing at least one edge 15a of the film portion 15: it is observed that when the second gripping member 25 is in the first position, it is apposed to the first gripping member 21 (Figure 25), so that, in use, the edge 15a of the film on which the second gripping member acts, is immediately adjacent the transversal band 16a on which the first gripping member acts in order to avoid a film waste during the following process steps.

The second gripping member 25 is moved with respect to the first gripping member 21 by means of a guiding element 30, optionally associated to the upper tool 14.

In a first embodiment, the guiding element 30 defines a closed path along which the second gripping member 25 is movable - along a single direction of motion. Preferably, the closed path develops along a lying plane parallel to the advancement direction B of said film and, under conditions of use of the machine, parallel to a vertical direction.

In the first embodiment, the guiding element 30 can comprise at least one selected in the group among: a belt, a chain, a rope or another pulling member capable of being disposed as a loop. The gripping member 25 is fixed to the guiding element 30 whose movement enables a consequent movement of the second gripping member 25 along the closed path. The closed path guiding element is configured for moving the second gripping member 25 along said operative stroke C; in such first embodiment, however, only a movement tract of the closed path is adapted to define the operative stroke C. More particularly, the closed path comprises a first rectilinear tract 29a and a second tract 29b also rectilinear and distanced from each other, which are connected by a first and second joining tracts 29c and 29d; indeed, the tracts 29c and 29d are arc tracts adapted to connect respective longitudinal end portions of the first and second tracts 29a, 29b. As it is visible in the attached figures, the first and second rectilinear tracts 29a, 29b are opposite and distanced by said arc tracts. At least only one part of the first rectilinear tract 29a is configured for defining the operative stroke C of the second gripping member 25. De facto, the first rectilinear tract 29a defines the operative stroke C, while the remaining tracts (29b, 29c and 29d) represent recirculating tracts of the second gripping member 25, adapted to enable to reposition this latter at the end of the stroke C.

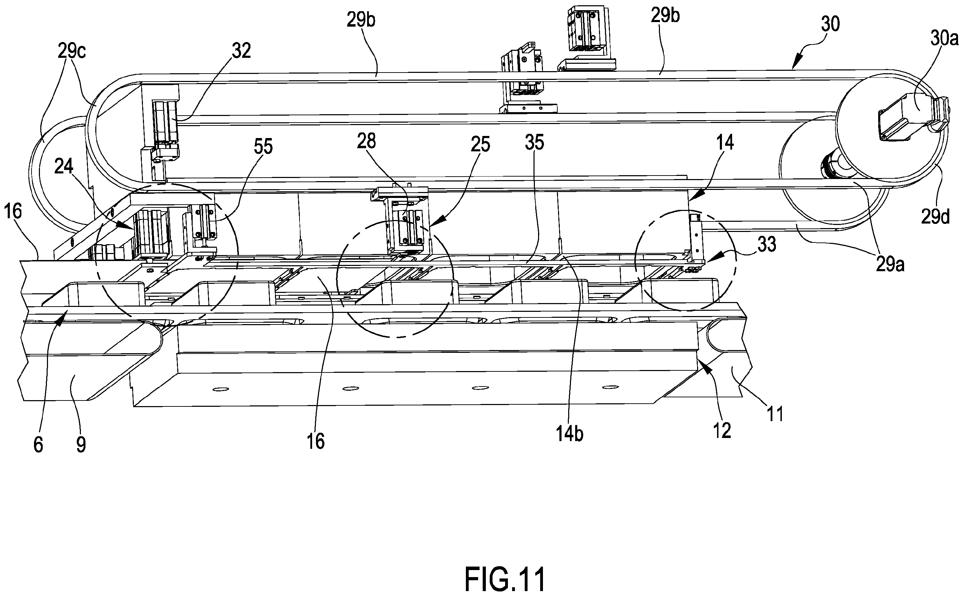

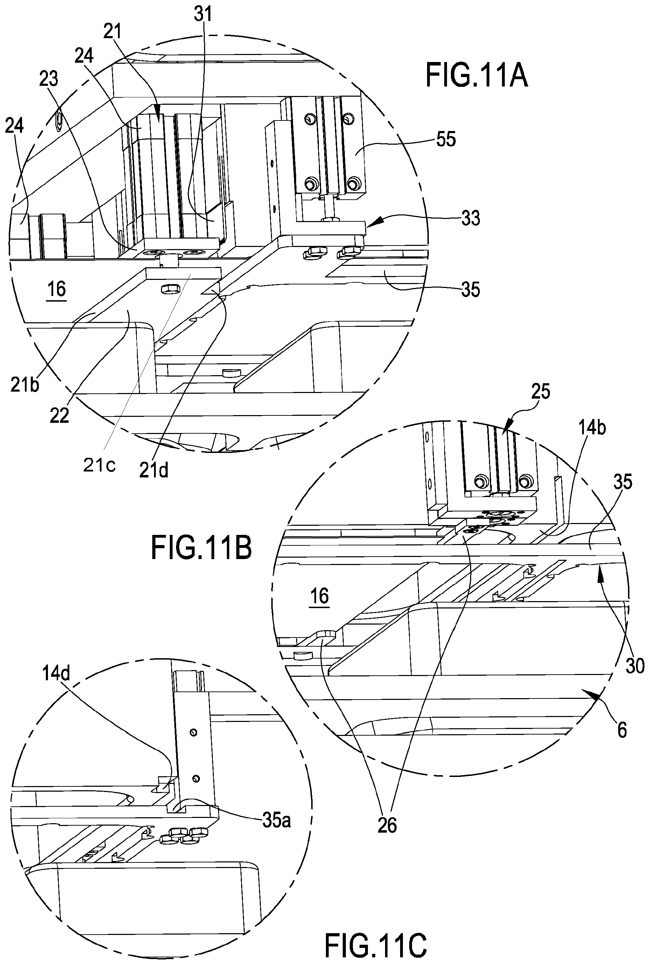

The above described loop shape is obtained by engaging the guiding element with two idle members of which at least one is motorized (see the motor 30a, an electric motor for example, illustrated in Figures 6 and 11). Each of said idle members comprises at least one selected in the group among: a friction wheel, a toothed wheel, a roll, a drum, a cylinder.

The guiding element 30 can stably bear only one second gripping member 25 or a plurality of second gripping members. The attached figures illustrate, in a non-restrictive way, a configuration of the apparatus exhibiting two second gripping members 25 for each gripping element 30. Still referring to the attached figures, the apparatus exhibits two guiding elements 30 opposite to each other with respect to the upper tool 14 and disposed at least partially on a respective side of this latter. The guiding elements 30 bear a same number of second gripping members distanced by a same pitch: each second gripping member of a gripping element is configured for cooperating with a second gripping member of the opposite guiding element so that there is always at least one pair of second gripping members 25 (each second member of the pair being placed in a respective of the two guiding elements) which can effectively act on a same film transversal band defined perpendicular to the advancement direction B.

In a second preferred embodiment, the second gripping member 25 reciprocally moves on a horizontal track, associable to the upper tool, due to the action of a longitudinal actuator associable also to the upper tool 14 and active on the/each second gripping member 25 for reciprocally moving this latter along the direction B. In this way, the second gripping member 25 can selectively move away from and towards the first gripping member 21 along said advancement direction B of the film 15, 16.

Also in this second embodiment of the guiding element, it is possible to provide two second gripping members 25 substantially identical with reference at least to the presently described features. In this case, each second gripping member 25 is active at a respective side of the upper tool 14 and is configured for moving between a respective closed condition, wherein grippingly acts on a lateral edge of said film, and a respective opened condition, wherein does not grippingly act on said film lateral edge. Each second gripping member 25 is linearly movable (by the action of the same longitudinal actuator 30 or by an action of a further longitudinal actuator 30 synchronously operating with the first one) reciprocally away from and towards the first gripping member along said operative stroke C parallel to the advancement direction B of said film for disposing the film portion 15 inside the packaging station 5 and below said upper tool 14, by acting on respective lateral opposite edges 15a of said film.

Advantageously, moreover the apparatus can comprise at least one adjusting member bearing at least said second gripping members 25 and configured for moving these latter with respect to the upper tool along a direction transversal to the advancement direction B of the film in order to vary the distance between the two second gripping members as a function of the width of said film portion. Preferably, the adjusting member is placed between each guiding element and at least one between the upper tool 14 and lower tool 12; in this way, each second gripping member 25, by means of the adjusting member, is movable towards and away from the lower and upper tools for enabling said member 25 to adapt to different dimensions (width) of the film useable for closing the support 2. In an embodiment of the invention not illustrated in the attached figures, an adjusting member is associated also to the first and second semi-portions of the first gripping member 21 and is configured for modifying the distance between the two semi-portions of the first gripping member along a direction transversal to the advancement direction B of the film; by means of the adjusting member, it is further possible to adapt the first gripping member 21 to the different dimensions (width) of the film useable for closing the supports.

In a further embodiment, the apparatus comprises a first and at least one second gripping members replaceable with respective first and second gripping members having different shapes and dimensions; in this way, it is possible to adapt the gripping members 21 and 25 to the different widths of the film for avoiding to use the above described one or plural adjusting members.

In a configuration that has been described above, the movement device 19 is configured to withdraw the film portion from an inlet area to the packaging station 5 and to move the portion 15 inside the station 5 and below the upper tool 14; in the configuration described above, the first gripping member 21 is placed at an inlet area of the packaging station while the second gripping member 25 is movable along the operative stroke C away from said first member 21 downstream of this latter with respect to the advancement direction B.

However, it is not excluded the possibility of providing a movement device 19 having a first gripping member 21 arranged at an outlet area of the packaged products of the packaging station 5 is not excluded; the second gripping member 25, which can be borne directly by the upper tool 14, is in this case movable away from and approaching the first gripping member 21 along an operative stroke C of sufficient extension to position the film portion 15 below the upper tool 14. In the latter described configuration, the second gripping member 25 is configured to withdraw the continuous film 16 at an inlet area of the packaging station 5 and bring the portion 15 below the upper tool 14 by means of a movement along the stroke C towards the first gripping member 21 (located at the outlet area of the packaged products of the same packaging station opposed to the film inlet area); the second gripping member 25, moving along the operating stroke C, operates upstream of the first gripping member 21 with respect to the advancement direction B of the film 16. In this variation of the device 19, the first gripping member 21 is configured to operate exclusively in the outlet area of the packaging station: the first gripping member 21 is therefore not movable with respect to the packaging station 5 along the advancement direction B of the film 16. For example, the first gripping member can be constrained to the end of the upper tool placed at the aforementioned product outlet area.

Referring now to the figures with reference to a further specific structural description, each lower plate 22 and upper plate 23 of the first gripping member 21 exhibit a respective active flat face 22a, 23a (Figure 10A) destined to contact said film; analogously, each lower clamp 26 and upper clamp 27 of each second gripping member 27 exhibit a respective active flat face 26a, 27a (Figure 24) destined to contact said film. So, the gripping action of the first and second gripping members does not damage the processed film. More precisely, in the illustrated examples, the lower plate and upper plate of the first gripping members exhibit a perimeter having a trailing edge 21a facing the packaging chamber, a leading edge 21b opposite to the trailing edge, and two sides 21c, opposite to each other and connecting the end of the leading edge to the end of the trailing edge: particularly, the lower plate exhibits the same plan shape as the upper plate and the same polygonal-shaped perimeter. According to an aspect, the trailing edge 21a of the plates exhibits a rectilinear central portion and a depression 21d at each of the two opposite sides so that each plate exhibits a dimension, measured parallel to said advancement direction B of the film, greater in a central area than the two lateral areas of the plate itself: substantially, each plate has a perimeter with a trailing edge 21a centrally rectilinear and parallel to the leading edge 21b and with two rectangular depressions 21d at the sides 21c (see Figures from 6 to 10A, for example). The lower clamp and upper clamp of each second gripping member 25 are configured for being inserted in a respective of said depressions present on the trailing edge of the upper and lower plates of the first gripping member: so, also after a cutting step by the cutter 31 flush with the trailing edge 21a of the first gripping member, the second gripping members are capable of grippingly acting on opposite edges of the film held by the first gripping member. More particularly, the upper clamp and lower clamp 27, 26 have a perimeter (particularly rectangular) countershaped to the shape of the respective depression 21d present on the trailing edge 21a of the perimeter of the upper and lower plates of the first gripping member 21.

More specifically, the cutter 31 is configured for being transversally movable with respect to said advancement direction B and therefore is capable of separating the film portion 15 from the continuous film 16 from the supplying source 20. In the example illustrated in the attached figures, the cutter 31 is movable along an ideal plane extending transversally, particularly perpendicular, to the advancement direction B. An auxiliary actuator 32, optionally supported by the upper tool, is active on the cutter 31 so that - upon actuating said auxiliary actuator - the cutter moves along an ideal cutting plane lapping the trailing edge 21a of the first gripping member 21 (Figure 9); the auxiliary actuator 32 is particularly configured for moving the cutter 31 between a rest position, wherein a cutter blade is distanced from the film portion 15 engaged by the first and second gripping members, and an operative position distanced from said rest position: the blade of the cutter 31, for reaching the operative position, must move along the ideal cutting plane T and must pass through the film for separating the film portion 15 from the remainder of the continuous film 16.

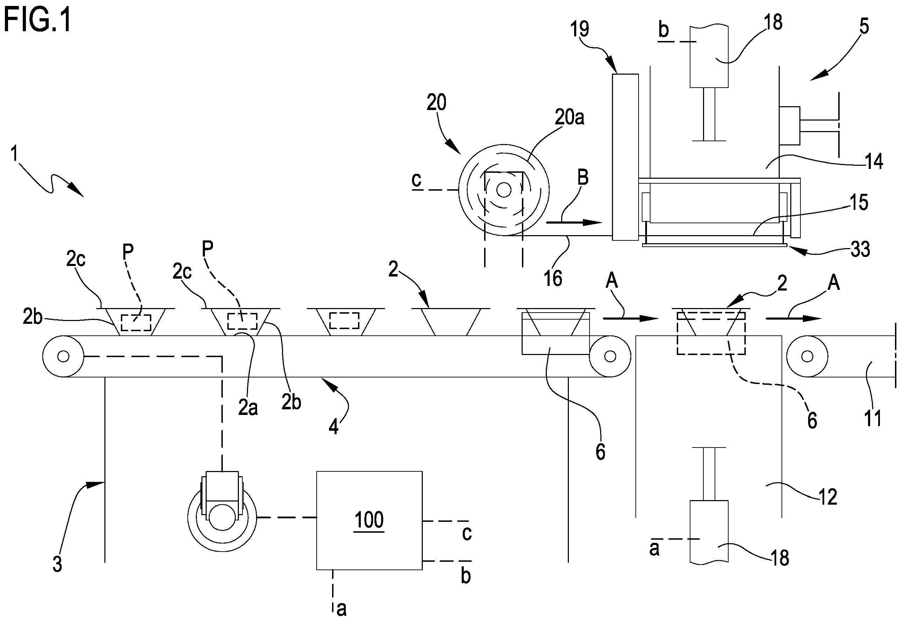

According to a further aspect of the invention, the apparatus 1 comprises a stop element 33 (see Figures 1, from 3 to 6, 10, from 14 to 18, for example) configured for cooperating with the upper tool 14 and holding, against the upper tool, the film portion 15 positioned below the upper tool itself: for this purpose, the stop element 33 and upper tool 14 are movable with respect to each other between at least one released condition, wherein the stop element 33 is distanced from the upper tool (Figures 1, from 3 to 6 and 10), and a gripped condition (Figures from 14 to 18), wherein the stop element 33 is approached the upper tool 14 and is capable of blocking the edge 15a (or the peripheral area 15a) of the film portion 15 against an abutment surface 14b of the upper tool 14. The relative movement between the upper tool and stop element 33 can be for example imparted by one or more blocking actuators 55 (Figure 10) interposed between the stop element and upper tool or between the supporting frame or stop element. As it is visible in the attached figures, the upper tool 14, of the described non-restrictive example, can define in the interior thereof one or more downwardly opened cavities 34: in this case, the upper tool exhibits an active surface 14a shaped for defining one or more domes with concavities facing the lower tool 12. Alternatively, the upper tool 14 can exhibit an active surface with a flat shape or only slightly domed. In any case, the active surface 14a of the upper tool is delimited perimetrally by the abutment surface 14b which is destined to abuttingly receive an upper surface 33a of the stop element (by interposing the film portion 15) in the example illustrated in the attached figures, both the abutment surface 14b and upper surface 33a define one or more contact annular surfaces for blocking the film portion 15.

Referring again to the attached drawings, it is observed that the upper tool 14 can, for example, comprise a base body 14' and at least one wall 14" emerging from the base body and defining, with this latter, one or more of the cited cavities 34 (for example 2, 3, 4 or more cavities) adapted to receive, in the packaging step, the portion of the product P emerging from the lower tool 12: the abutment surface 14b - which is annularly shaped for a single cavity or is multi-annularly shaped for plural cavities - is defined below the wall 14" of the upper tool and is destined, as said before, to abuttingly act (still by interposing the film portion 15) on the upper surface 33a of the stop element 33. The upper tool 14 comprises also at least one heater 50 configured for heating at least one active surface 14a, optionally both the abutment surface 14b and active surface 14a of the upper tool. The heater 50 can be of any type, for example electric (formed by one or more resistors), hydraulic (formed by one or more channels for a heating fluid), electromagnetic (formed by radiating circuits), or also of another type. Moreover, the upper tool 14 comprises an attracting device 51 configured for attracting at least part of the film portion 15 contacting said active surface 14a of the upper tool. The attracting device can comprise any solution capable of attracting the film portion 15 in order to contact the active surface 14a of the upper tool 14, particularly in order to contact the surface of the dome/s defined in the upper tool itself. For example, the attracting device 51 can comprise a plurality of suctioning openings 52 distributed, optionally evenly, at the active surface and fluidically communicating with a suctioning device (45, 53) for suctioning a gas from the packaging chamber 17.

From the structural point of view, the stop element 33 comprises a perimetral frame 35 configured for interposing between the lower tool and upper tool: the perimetral frame 35 exhibits at least one through opening 36 and defines the upper surface 33a destined to cooperate with the abutment surface 14b of the upper tool for blocking the film portion against the upper tool, when the upper tool and stop element are in a gripped condition. As it is observed from the attached drawings, the perimetral frame 35 of the stop element 33 can define a plurality of through openings 36 which are in a number based on the number of supports received, during each cycle, by the lower tool 12. In addition, the perimetral frame 35 of the stop element 33 exhibits at least one recess 35a placed at the upper surface 33a and at an end of the frame 35, opposite to the position of the first gripping member 21. Preferably, two recesses 35a are provided, each on a respective side of the perimetral frame 35, in other words at a respective angle area of the perimetral frame 35, and each configured for receiving at least part of the respective second gripping member 25 when this latter is at the end of stroke, away from the first gripping member 21 and when the stop element 33 is in said gripped condition, wherein the stop element 33 is approached the upper tool 14 for blocking the edge 15a (or peripheral area 15a) of the film portion 15 against the abutment surface 14b of the upper tool 14. As it is visible in the attached figures, the upper tool 14, of the described non-restrictive example, can define in the interior thereof one or more downwardly opened cavities 34.

More particularly, the recess 35a is adapted to substantially receive the lower clamp 26 of the second gripping member 25: the depth of the recess 35a enables to house only the lower clamp 26. The upper tool 14 also exhibits a respective recess 14d opposite to the recess 35a of the stop element 33, which is configured for receiving the upper clamp 27 of the second gripping member 25 always when the stop element 33 is approached the upper tool 14. Particularly, the upper tool 14 comprises at least two recesses 14d, each for each second present gripping member 25.

The cooperation of the recesses 14d and 35a enables the gripping member 25 to hold - in the approached position of the stop element 33 and upper tool - the film portion 15 and enables to place such portion in contact with the abutment surface 14b of the upper tool.

It is observed that the recess 14d (the pair of recesses) on the upper tool 14 is a part of this latter which cannot contact the film portion 15 in a closed condition of the packaging station 5, in other words in a condition wherein the upper and lower tools abut each other. The recess 14d of the angle portion of the upper tool 14 is distanced from a respective angle area of the film portion 15 which consequently cannot be constrained (heat-sealed) to the underlying support 2. However, it is noted that the recess 14d is placed at a predetermined distance from an upper perimetral edge of the support so that the upper tool can tightly heat-seal the film portion to the support; advantageously, the recess 14d enables to define a film angle not constrained to the support which can define an easily gripped film area - in the packaging field known also as *easy peel* - for opening the package.

If the stop element 33 exhibits a plurality of through openings 36, and the upper tool 14 exhibits a plurality of cavities 34, the apparatus 1 is configured for placing the stop element and upper tool so that the through openings 36 are aligned and in a number equal to the corresponding cavities 34 present on the upper tool, in order to enable the upper portion of a possible product outwardly projecting from the lower tool to freely pass through. In the illustrated example, there are several cavities 34 aligned with the through openings 36 formed in the perimetral frame 35 cooperatively with the bars 35' of the stop element, and - if present - aligned with the seats 13 of the lower tool 12.

As previously said, the upper tool 14, lower tool 12 and stop element 33 are configured and assembled to the supporting frame 3 for disposing each cavity 34 of the upper tool 14 aligned with and above the respective opening 36 present in the stop element; in the variant of the lower tool configured for receiving one or more trays 2, the opening 36 can be positioned in turn above the respective seat 13 of the lower tool 12.

Turning now to a detailed description of the lower tool 12, it comprises - in the first embodiment - at least one insert 38 defining a corresponding one of said seats 13 for a tray 2. As it is visible in the attached figures, the lower tool can define a plurality of seats or a single seat according to the number of trays 2 to be packaged during each cycle. The seat 13, defined by the insert 38, is shaped for suitably receiving and stably positioning the respective tray 2: for example, if the trays 2 have a lateral wall 2b and an upper flange 2c, the seat 13 exhibits a shape of a cavity countershaped to the upper portion of the lateral wall of the tray with an abutment area destined to receive the flange of the tray. If the support 2 exhibits, on the contrary, a flat shape, the insert could for example exhibit a seat formed by a slight depression in the center of a flat area or a seat simply formed by an abutment flat area of the flat support itself. Moreover, the lower tool 12 comprises a supporting perimetral portion 39, outside said insert 38, and having an abutment upper surface 39a configured for contactingly receiving the stop element; in said approached condition of the upper and lower tools, the stop element 33 is placed between the abutment surface 14b defined below the upper tool 14 and the abutment surface 39a defined above the lower tool 12, and particularly above the perimetral portion 39.

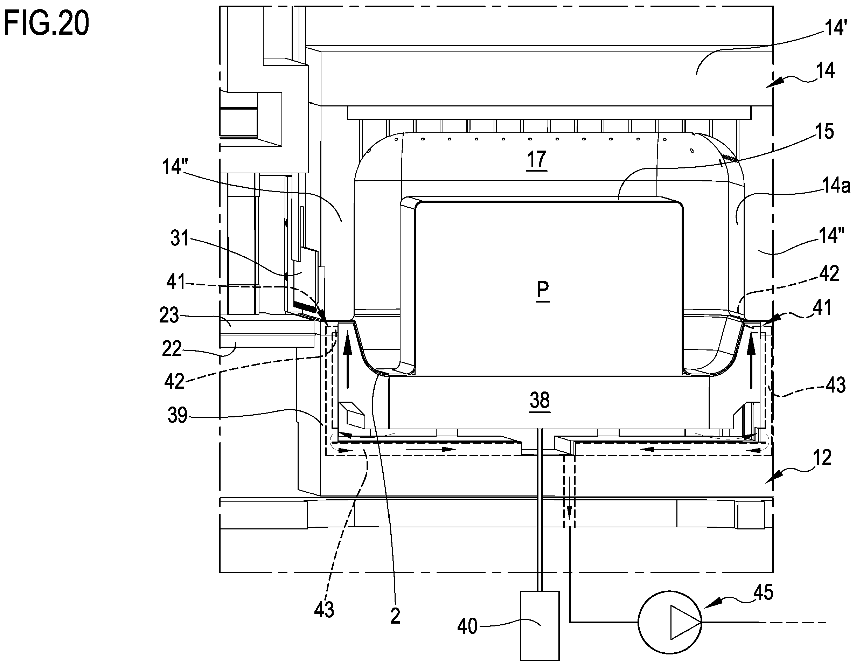

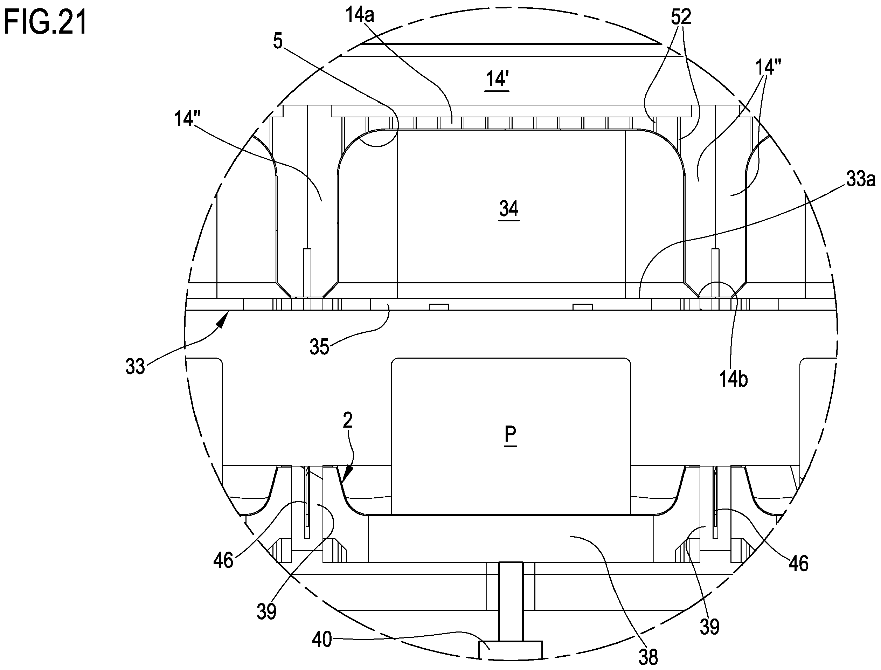

It is observed that the insert can be removably engaged with the supporting perimetral portion, for enabling to substitute the insert 38 when the type or shape of the trays 2 are changed for the packaging cycle. In case of plural inserts 38, plural perimetral portions 39 perimetrally disposed with respect to each insert 38 can be provided. The perimetral portion 39 and insert 38 are movable from each other - upon operating at least one aligning actuator 40 - between a first position, wherein the perimetral portion 39 holds the upper surface 33a of the stop element 33 above an upper surface 38a of the insert 38 (see Figure 19, for example), enabling at least one channel 31 present inside the stop element 33 to communicate with an internal volume of the packaging chamber 17, and a second position wherein the perimetral portion 39 of the lower tool is placed so that the upper surface 33a of the stop element 33 is substantially coplanar with the upper surface of the insert 38, closing said channel 41 (see Figure 20, for example). Substantially, the insert 38 and perimetral portion 39 are movable from each other for moving the stop element 33 with respect to the insert and for selectively establishing a fluid communication between the channel 41 of the stop element and the interior of the packaging chamber 17. It is observed that each channel 41 present in the stop element 33 communicates with a predetermined number, preferably a plurality, of vents 42 communicating with the interior of the packaging chamber when the perimetral portion of the lower tool is in the cited first raised position of the stop element 33 with respect to the upper surface of the respective insert. The vents 42 communicate with the channel 41 developing along at least one portion of the frame of the stop element 33, by placing themselves - at least in the approached condition of the tools - fluidically communicating with at least one corresponding suctioning line 43 or gas injection line present in the lower tool 12 (for example present in each perimetral portion 39) and communicating respectively with a suctioning device 45 capable of removing a gas from the packaging chamber 17 or with a gas injection device capable of injecting a gas mixture having a controlled composition into the packaging chamber 17. De facto, the vents 42, when are in communication with the suctioning device, are used for removing a gas from the packaging chamber 17 in order to make packages known in the packaging field as *skin* type; alternatively, the vents can communicate with the gas injection device for making modified-atmosphere packages. However, it is observed that, in an embodiment of the apparatus, a predetermined number of vents 42 can communicate with the gas injection device, while a further predetermined number of vents 42 can communicate with the gas removing device: such devices (for removing and injecting) can be simultaneously actuated - in the approached condition of the lower and upper tools - for enabling to efficiently remove air from the chamber 17 and substantially simultaneously for defining modified-atmosphere packages.

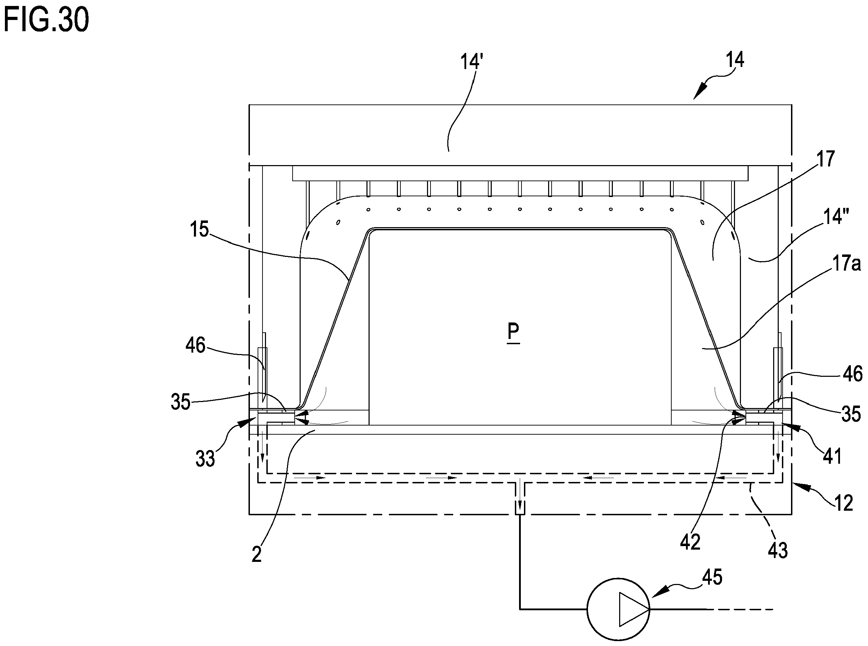

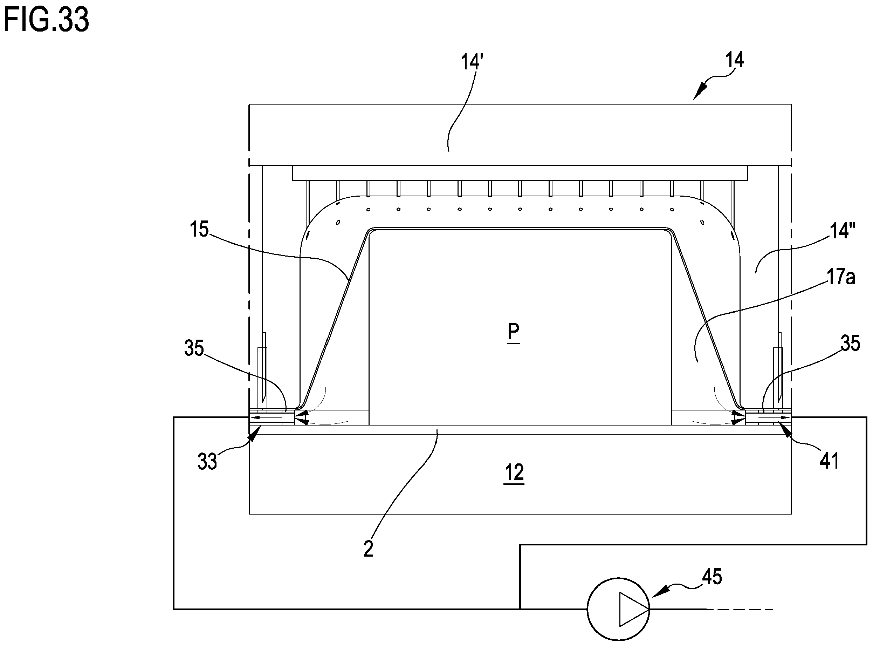

In the second embodiment of the lower tool 12, this can comprise a plate exhibiting a flat upper surface for receiving the supports 2 (see Figures from 28 to 33, for example). Figure 30 schematically illustrates a configuration of the lower tool 12, wherein the supports receiving plate exhibits a width greater than the one of said supports; in a lateral portion emerging from said supports, the lower tool comprises the suctioning line 43 communicating - in the approached condition of the lower and upper tools - with the channel 41 of the stop element 33. In a variant, schematically illustrated in Figure 33, the lower tool 12 comprises a plate exhibiting a width substantially equal to the one of the supports 2; in such configuration, the channel 41 of the stop element can fluidically communicate with a suctioning device - or alternatively with a gas injection device - through a line outside the lower tool 12.

As said, the upper tool 14 comprises a base body 14' and a wall 14" emerging from the base body and defining with this latter a number of cavities 34 equal to the number of openings 36 of the stop element 33. As it can be observed from Figures from 19 to 23, a lower portion 14c of the wall 14" defines the abutment surface 14a of the upper tool 14; in Figures 19 and 20 such terminal portion is rectilinear and perpendicular to a vertical direction. On the contrary, Figures from 21 to 23 illustrate an embodiment wherein the terminal portion 14c is sloped and deviates towards the outside of each cavity 34 with respect to the vertical direction; for example, the lower portion 14c is tapered from the top to the bottom. In other words, such lower portion is shaped so that, when the perimetral portion 39 of the lower tool and insert 38 are in the second position, the abutment surface 14b of the lower tool does not overlap the perimetral area of the insert delimiting each seat 13 and - in a condition of use - neither thrustingly acts against the flange 2c or against an edge portion of the tray 2 possibly housed in each seat 13.

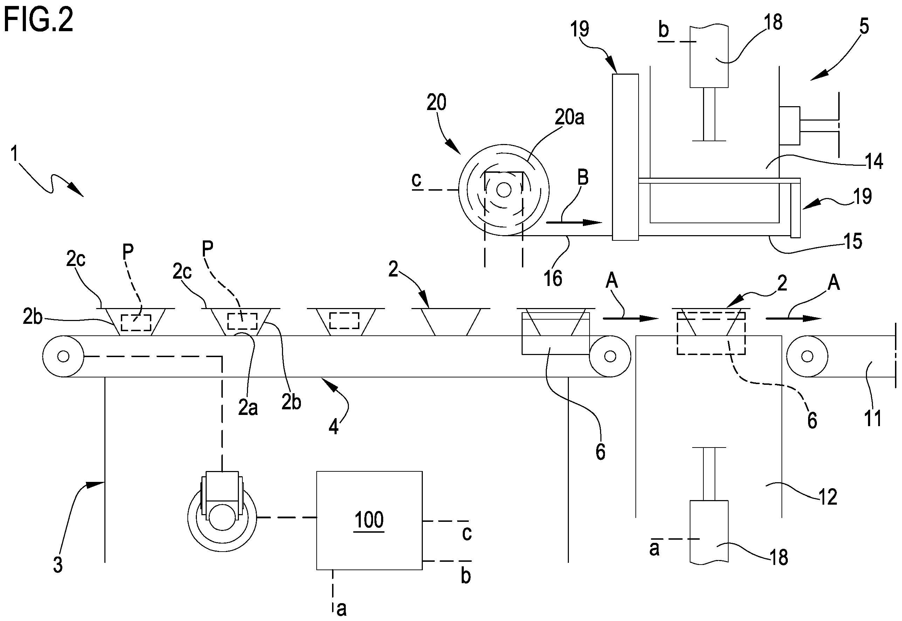

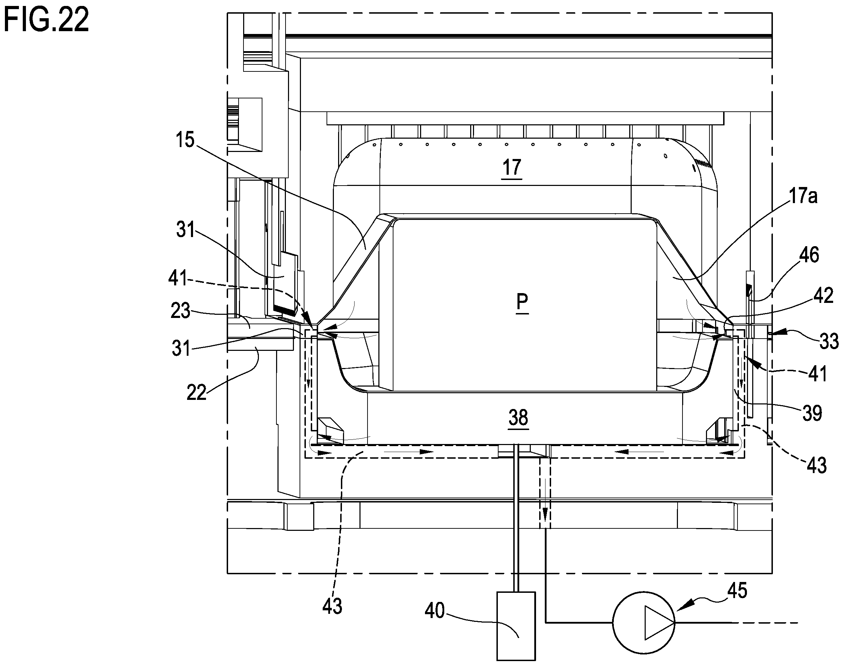

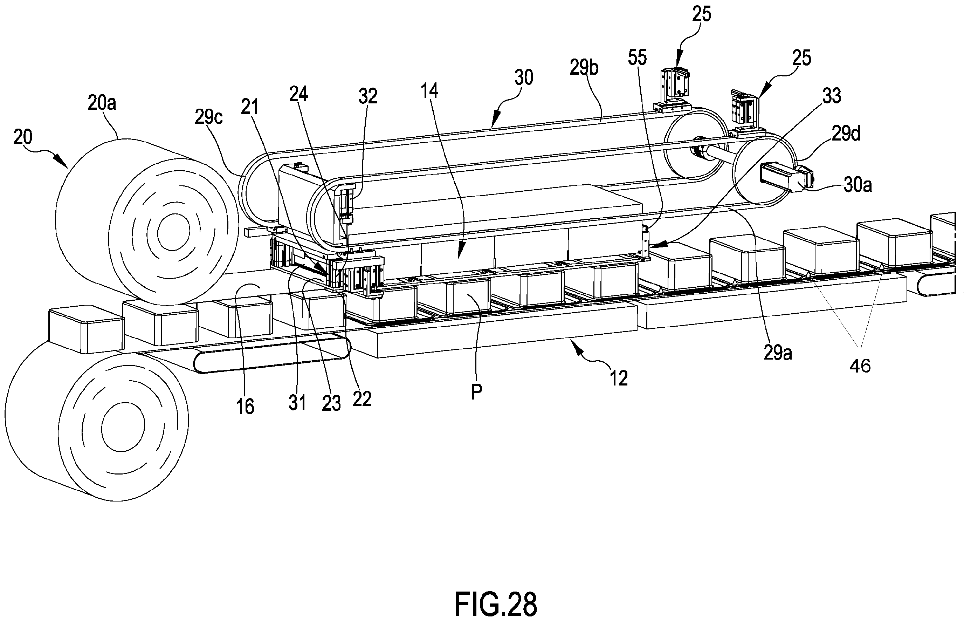

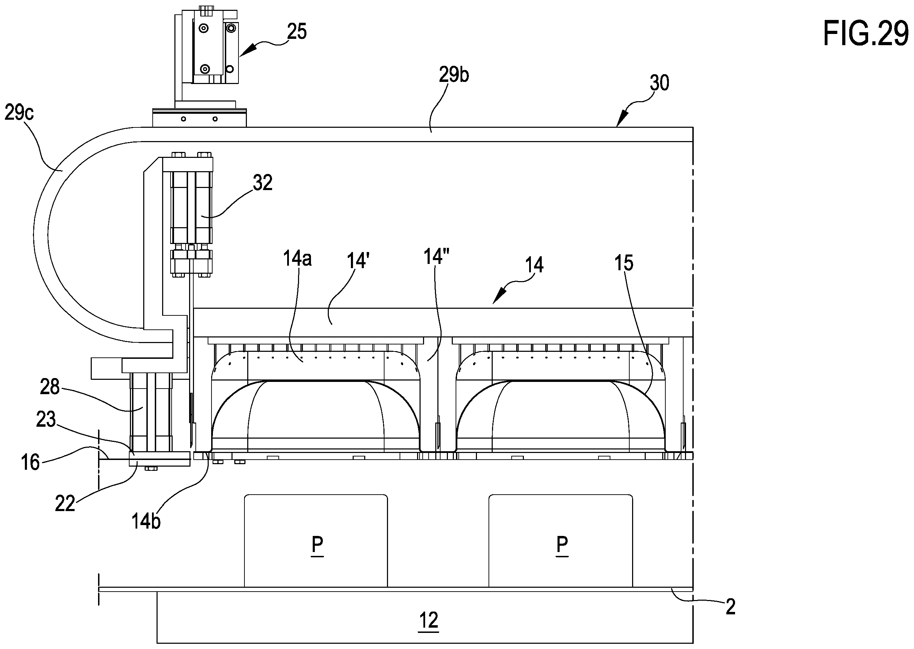

Lastly, it is observed that astride a cavity 34 and another one (when the upper tool is provided with a plurality of cavities) there are one or more auxiliary cutters 46 movable transversally to the directions A and B, particularly movable - under conditions of use of the apparatus 1 - vertically, for separating from each other adjacent film portions of the supports 2. The auxiliary cutters 46 can be housed by the upper tool as illustrated in Figures from 28 to 34, or by the lower tool, for example in the perimetral portion 39 as illustratively shown for example in Figures 2 and 22; the cutters 46 are configured for moving between a rest condition, wherein are completely inside the respective tool in which are housed, and an active condition in which they move at a suitable instant towards the opposite tool. For example, the auxiliary cutters 46 can move through the perimetral walls and through suitable slots 47 made on the frame of the stop element 33. However, it is observed that the film cutting step - and possibly also the support 2 cutting step - can be performed downstream the packaging station 5 by means of auxiliary cutters 46 as schematically illustrated in Figure 28.

### First embodiment variant of the apparatus 1

The above described apparatus 1 comprises both the movement device 19 and stop element 33, both associated to the packaging station 5.

Figure 2 illustrates a first embodiment variant of the apparatus showing only the movement device 19: the apparatus in the first embodiment variant, does not exhibit the stop element 33.

With such embodiment, the film 16 is continuously unwound from a supplying source 20 and delivered to the movement device 19 which moves the film above the support/s, between the upper tool 14 and lower tool 12.

### Second embodiment variant of the apparatus 1

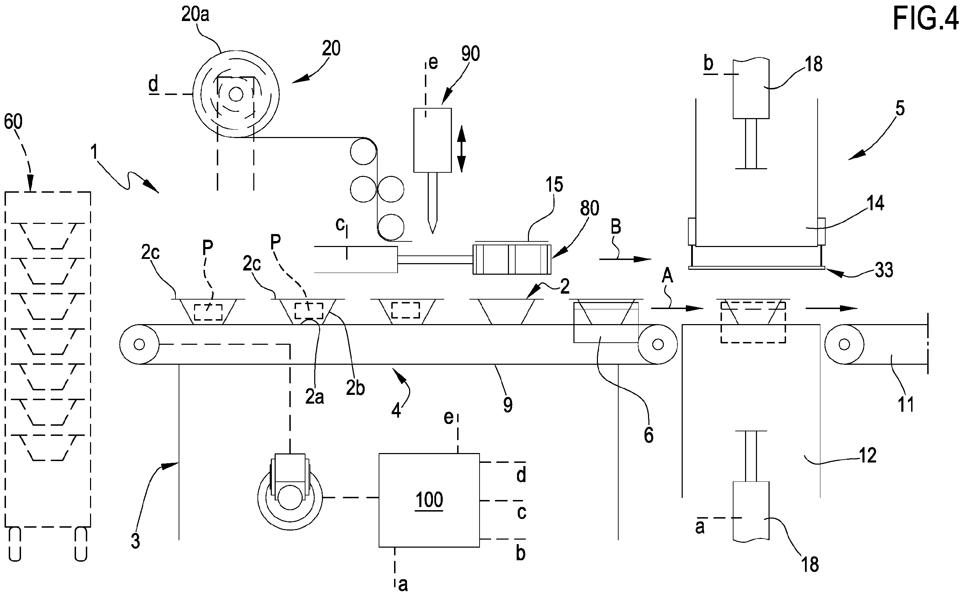

On the contrary, Figure 4 illustrates a further embodiment variant of the apparatus wherein the film 16 is cut in discrete sheets or film portions 15 upstream the packaging station 5. With such configuration, the apparatus 1 comprises a cutting unit 90 adapted to define said portions 15 and a transfer device 80 (see Figure 4) configured for withdrawing the pre-cut sheets (film portions) outside the packaging station 5 for bringing them to the interior of this latter, above the respective tray/s 2. Such film pre-cutting and moving system outside the packaging station is, for example, specifically described in the patent application PCT No. WO2014/166940 A1 of the same Applicant.

In this second embodiment, the movement of the film portion 15 is performed by the transferring device 80; the apparatus 1 comprises only the stop element 33 configured for receiving the film portion 15 from the transferring device 80 and then for putting in contact the film portions 15 with the upper tool: the apparatus 1 does not comprise the movement device 19, the function thereof, in this second embodiment variant, is performed by the transferring device 80.

### Packaging process

After this mainly structural description, then a packaging process using the above described apparatus 1, in other words the apparatus 1 according to one or more of the attached claims, will be described.

Particularly, it is described in the following a cycle of the packaging process executed by the apparatus 1: the cycle, described in the following, is periodically repeated enabling to package products disposed on the supports 2.

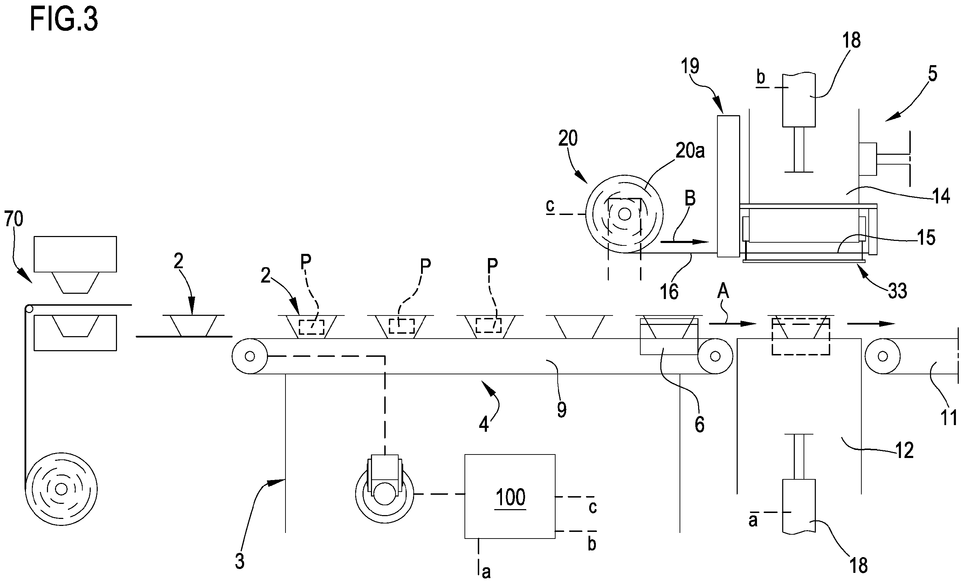

First of all, a predetermined number of supports 2 are advanced along the advancement direction A by the conveyor 4. Particularly, the inlet conveyor 9 transports a predetermined number of supports 2 from a supports loading station 60 or from a forming station 70 aligned with the supports 2 (such stations are respectively illustrated in Figures 4 and 3) to an area at the inlet of the packaging station 5. Here, the guiding structures 6 are laterally apposed to the support/s 2 by a motion transversal to the advancement direction A, so that the same guiding structures 6 can engage and withdraw one or plural supports 2. The packaging station 5, in this step, is open, the tools 12, 14 being in a distanced condition for enabling the support 2 to enter. Consequently, the guiding structures 6 are moved for transporting the supports inside the packaging station 5: each guiding structure 6 is moved by a respective positioning actuator 7 so that the front portion 8 withdraws a corresponding predetermined number of supports from the inlet conveying member 9 and moves them to the interior of the packaging station 5. Simultaneously, the rear portion 10 of the guiding structure/s moves an equal number of finished packages towards the outlet conveying member 11 (for example see the figure).

Meanwhile, the guiding structures move the supports 2 to the interior of the packaging station 5, the movement device 19 receives a film portion 15 from the source 20 for supplying the continuous film 16, and positions such film portion at the upper tool: particularly, the movement device 19 withdraws the film portion from an area at the inlet of the packaging chamber and moves such film portion to the inside of the station 5 and below the upper tool, arriving to a position wherein the film portion 15 is overlapped the support/s which the guiding structure 6 positions at the lower tool 12.

Still more particularly, the first gripping member 21 is initially in a closed condition and grippingly acts on said film by suitably operating the first actuator 24; the second gripping member 25 is also in the respective closed condition juxtaposed to the first gripping member by suitably operating the second gripping actuator 28. During this first step, the second gripping element/s are in the first position and apposed to the first gripping member 21, so that the film edge 15a on which each second gripping member acts, is immediately adjacent the transversal band 16a on which the first gripping member acts for avoiding waste of film in the following process steps. Particularly, in this condition, the second gripping member/s act on a corresponding one of the lateral edges of the film portion, extending at the depressions placed on each side of the trailing edge of the first gripping element.

In order to enable to position the film portion 15 below the upper tool, the first gripping member is moved to an opened condition, and each second gripping member 25 (held in a closed condition) is moved with respect to the first gripping member according to the advancement direction B along the guiding element. Each second gripping member 25 follows the predetermined operative stroke C for positioning the film portion 15 below the overall active surface 14a of the upper tool 14.

At this point, the stop element 13 cooperates with the upper tool 14 for holding against the upper tool 14 the film portion 15 positioned below the upper tool itself: substantially, the stop element 33 and upper tool 14 are moved to the gripped condition, wherein the stop element 33 is approached the upper tool 14 and blocks an area of the film portion 15 against an abutment surface 14b of the upper tool 14. As it is visible in the attached figures, the film portion 15 is blocked below the upper tool and particularly, for example, below the domes present in the upper tool 14. During this step, the second gripping elements are housed at least partially in the respective recesses present on the upper surface of the stop element, in order to still again minimize the waste of film.

After the blocking action of the stop element 33, the attracting device 51 can be activated (activated only for the vacuum-packaging processes) which attracts at least part of the film portion 15 in contact with said active surface 14a of the upper tool, particularly with the surface of the dome/s defined in the same upper tool. For example, the suctioning device 53 can be activated for suctioning a gas from the openings 52 in order to determine a negative pressure between the film portion 15 and active surface 14a and therefore the film portion in contact with this latter is attracted. At this point, the cutter 31, cuttingly acts for separating the film portion 15 from the continuous film 16. It is observed that the cutter can act any time after blocking the film portion 15 by the stop element 33, in other words also before or during the above described film attracting step. It is observed that during the just described step of deforming the film portion, the heater 50 provides to hold the active surface 14a, heated at a predetermined temperature promoting the deformability of the film itself. The heater can be activated before starting the step of deforming the film in order to take the film portion to suitable thermal conditions.

After blocking the film portion 15 and when the supports are entering into the packaging station 5, the upper tool and lower tool are moved to an approached condition in order to form the packaging chamber 17. In the configuration wherein, the lower tool defines the seats 13 (first embodiment), the perimetral portion 39 and insert 38 in a first step, are in the first position wherein the perimetral portion holds the upper surface 33a of the stop element 33 above the upper surface 38a of the insert 38, enabling the channel 41 present inside the stop element 33 to communicate with an internal volume of the packaging chamber (see Figure 19, for example). Specifically, the vents 42 communicate with the interior of the packaging chamber when the perimetral portion of the lower tool is in the cited first position wherein the stop element 33 is above the upper surface of the respective insert.

At this point, the process can perform the steps of vacuum-packaging the products (skin-type packages) or the steps for defining modified-atmosphere packages.

With reference to the vacuum-packaging, the vents 42 communicate with the channel 41 which - in the approached condition of the tools - fluidically communicates with at least one respective suctioning line present in the lower tool 12 (present in each perimetral portion 39, for example) and communicating with the suctioning device 45 capable of removing a gas from the packaging chamber. During this step, the suctioning device 45 is activated, causing through the channel 41, the removal of the gas from the packaging chamber, and particularly from the volume of the chamber between the film portion and the underlying tray/s 2.

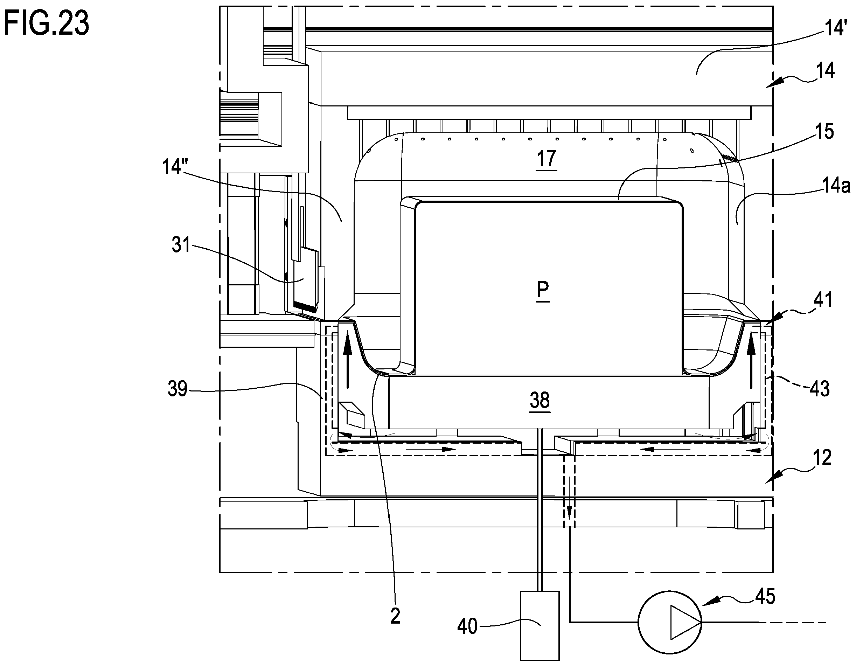

After a predetermined time interval from the start of the just described suctioning step, in other words once is reached a predetermined vacuum level in the volume extending between the film portion 15 and support 2, the attracting device is turned off so that the film portion can be laid down on the product (see Figure 20): particularly, by turning off the attracting device, it is possible to inject again air above the film (by the upper tool) in order to establish - again above the film portion 15 - an atmospheric pressure adapted to bring said film portion in contact with the support. However, it is observed that - in the configuration of the lower tool exhibiting the seats 13 (the lower tool is configured for receiving the trays) - while the perimetral portions 39 and insert 38 are in the respective first position, the film portion 15 cannot contact the upper surface of the perimetral edge of the underlying support (the flange of the tray or perimetral edge of the tray) because the film trapped between the stop element and abutment surface of the upper tool remains distanced from the abutment area and from the seat present in the lower tool. Meanwhile, the step of attracting the air through the channel 41 can continue. At a certain point, the perimetral portion and insert are moved to the second position (by raising the insert 38 with respect to the perimetral portion 39, for example) wherein the perimetral portion 39 of the lower tool 12 is disposed so that the upper surface 33a of the stop element 33 is substantially coplanar with the upper surface of the insert 38, closing said channel 41 and bringing in contact at least a perimetral edge of the film portion with the perimetral flange or edge of the tray (Figures 20 and 23). During this step, due to the thermal condition of the film, the perimetral edge of the film portion 15 is tightly heat-sealed to the perimetral flange or edge of the tray. Actually, during this step, the film portion (due to the evacuation of a gas below the film portion and due to the simultaneous reinjection of the atmospheric pressure above said film portion) intimately goes in contact with the product by forming a kind of skin with it and adheres by heat-sealing to the upper surface of the tray which is not occupied by the product.

In case of a modified-atmosphere packaging, the vents 42 communicate with the channel 41 which - in the approached condition of the tools - fluidically communicates with at least one respective gas injection line communicating with the injection device capable of blowing a gas into the packaging chamber. During this step, the injection device is activated for determining, through the channel 41, the injection of gas into the packaging chamber, and particularly in the volume of the chamber extending between each film portion and the underlying tray/s 2. In the configuration of the lower tool provided with seats 13 for receiving trays, while the perimetral portion 39 and insert 38 are in the respective first position, the film portion 15 cannot contact the upper surface of the perimetral edge of the underlying support (the flange of the tray or perimetral edge of the tray) because the film trapped between the stop element and abutment surface of the upper tool remains distanced from the abutment area and from the seat present in the lower tool. Meanwhile, the step of blowing air through the channel 4 can continue. At a certain point, the perimetral portion and insert are moved to the second position (for example by raising the insert 38 with respect to the perimetral portion 39), wherein the perimetral portion 39 of the lower tool 12 is disposed so that the upper surface 33a of the stop element 33 is substantially coplanar with the upper surface of the insert 38, closing said channel 41 and bringing in contact at least a perimetral edge of the film portion with the perimetral flange or edge of the tray. In this step, the perimetral edge of the film portion 15 is tightly heat-sealed to the perimetral flange or edge of the tray.

Still during this step or also before it as soon as the film portion is blocked at least with respect to the upper tool by means of the stop element, also the present auxiliary cutters 46 can act, if the packaging station 5 is destined to make a plurality of packaged products in a single cycle, in order to separate packages adjacent to each other.

Lastly, the packaging station 5 is moved again to the distanced condition. Therefore, the guiding structure/s 6 are moved so that the front portion of the same transports new supports 2 to the interior of the packaging station and the rear portion 10 of the guiding structure/s provides to move a same number of finished packages towards the outlet conveying member 11. At this point, the finished packages can be extracted, and a new manufacturing cycle starts again according to the previous description.

### Apparatus 1 comprising a control unit 100

Lastly, the apparatus 1 comprises a control unit 100 configured for:
- commanding the inlet conveyor 9 to move a predetermined number of supports 2 to a supports loading station 60 or from a forming station 70 aligned with the supports to an area at the inlet of the packaging station 5;
- commanding the positioning actuator 7 so that the guiding structure/s 6 are laterally apposed to the support/s, engage one or plural supports (the attached figures illustrate in a non-restrictive way four trays) and therefore move the supports to the interior of the packaging station 5;
- while the guiding structures 6 provide to move the supports 2 to the interior of the packaging station 5, commanding the movement device 19 to receive a film portion 15 from the source 20 for supplying the continuous film 16, and to position such film portion at the upper tool and overlapped the support/s which the guiding structure 6 positioned at the lower tool 12.

As hereinbefore described, the control unit 100 is configured or programmed so that, while the guiding structures 6 provide to move the supports 2 to the interior of the packaging station 5, the movement device 19 is commanded to receive a film portion 15 from the source 20 for supplying the continuous film 16 and to position such film portion at the upper tool 14. Still more particularly, the control unit 100 initially commands the first gripping member 21 in the closed condition on said film due to a suitable operation of the first actuator 24 and commands the second gripping member 27 also in the respective closed condition juxtaposed to the first gripping member due to a suitable operation of the second gripping actuator 28. Then, the control unit commands the first gripping member in an opened condition and therefore commands each second gripping member 25 (held in the closed condition) to move with respect to the first gripping member according to the advancement direction B along the guiding element. Particularly, the control unit commands the longitudinal actuator so that each second gripping member 25 goes through the predetermined operative stroke C in order to position the film portion 15 below the overall active surface of the upper tool.

The control unit is configured for holding the packaging station opened in the distanced condition of the tools at least during the just described steps.

The control unit 100 is also configured for performing the following steps which occur when the packaging station 5 is still open (even though, as an alternative, it would be possible to bring the packaging station with the tools apposed to each other before performing the following steps):
- commanding the blocking actuator 55 to bring the stop element 33 and upper tool 14 to the gripped condition, wherein the stop element 33 is approached the upper tool 14 and blocks part of the film portion 15 against an abutment surface 14b of the upper tool 14;
- commanding the heater 50 to hold heated the active surface 14a at a predetermined temperature;
- after the blocking action of the stop element 33, possibly activating the attracting device 51 and attracting at least part of the film portion 15a in contact with said active surface 14a of the upper tool (this step is required only for vacuum-packaging products) ;
- commanding the auxiliary actuator 32 so that the cutter 31 can separate the film portion 15 from the continuous film 16. The cutter 31 can be cuttingly commanded at each instant after blocking the film portion 15 by the stop element 33, in other words also before or during the above described film attracting step.

Lastly, the control unit 100 is configured so that - after blocking the film portion 15 and when the supports 2 enter the packaging station 5 - the upper tool 14 and lower tool 12 are moved to an approached condition in order to form the packaging chamber, by commanding the main actuator 18.

Particularly, the control unit 100 is configured or programmed for:
- commanding the aligning actuator 40 so that, in a first step, the perimetral portion 39 and insert 38 are in the first position wherein the perimetral portion holds the upper surface 33a of the stop element 33 above the upper surface 38a of the insert 38, enabling the channel 41 present inside the stop element 33 to communicate with the internal volume of the packaging station;
- activating the suctioning device 45 and/or gas injection device for respectively determining, through the channel 41, the gas removal from the packaging station or the gas injection into the chamber 17;
- after a predetermined time interval from the start of the just described suctioning and/or injecting steps, optionally turning off the attracting device so that the film portion 15 can be laid down on the product by continuing the gas removal through the channel 41;
- optionally, commanding the aligning actuator 40 to move the perimetral portion and insert to the second position (for example by raising the insert with respect to the perimetral portion), wherein the perimetral portion 29 of the lower tool is disposed so that the upper surface 33a of the stop element 33 is substantially coplanar with the upper surface of the insert 38, closing said channel 41 and bringing in contact at least one perimetral edge of the film portion with the perimetral flange or edge of the tray 2: during this step, due to the thermal condition of the film, the perimetral edge of the film portion is tightly heat-sealed to the perimetral flange or edge of the tray;
- optionally, as soon as the film portion 15 is blocked at least with respect to the upper tool 14 by means of the stop element 33, operating the auxiliary cutters 46 for separating packages adjacent to each other.

Lastly, the control unit 100 is configured for commanding the main actuator 18 and bringing again the packaging station 5 to the distanced condition and commanding the positioning actuator 7 to move the guiding structure/s 6 so that the front portion 8 of the same transports new supports 2 to the interior of the packaging station 5, while the rear portion 10 of the guiding structure/s provides to move an equal number of finished packages towards the outlet conveying member 11.

## Claims

1. Apparatus for packaging a product (P) disposed on a support (2), said apparatus (1) comprising:
- a supporting frame (3),
- a conveyor (4), engaged with the supporting frame (3) and configured for moving one or more supports (2) along a predetermined advancement direction (A),
- a packaging station (5) having:
∘ a lower tool (12) configured for receiving one or more of said supports (2),
∘ an upper tool (14) configured for receiving at least one film portion (15) to be associated to said one or more supports (2),
wherein the upper and lower tools (12, 14) are movable from each other between at least one distanced condition, at which the lower tool and upper tool are configured for enabling the film portion (15) and support (2) to enter the packaging station, and at least one approached condition,
- a movement device (19) configured for receiving a continuous film (16) from a supplying source (20) and positioning said film portion (15) at the upper tool, the movement device (19) exhibiting:
∘ at least one first gripping member (21) configurable between a closed condition, wherein such first gripping member grippingly acts on said film, and an open condition, wherein such first gripping member does not act on said film,
∘ at least one second gripping member (25) also configurable between a respective closed condition, wherein such second member grippingly acts on said film, and a respective open condition, wherein such second member does not grippingly act on said film, said second gripping member (25) being movable with respect to the first gripping member (21) along an advancement direction (B) of said film and being configured for disposing said film portion (15) into the packaging station (5) and below said upper tool (14),
- a cutter (31) movable transversally with respect to the advancement direction (B) of the second gripping member (25) and configured for separating from said continuous film (16) said film portion (15) positioned below the upper tool (14),
**characterized by** the fact that the apparatus further comprises an auxiliary actuator (32) active on the cutter (31),
wherein the cutter is movable - following an operation of said auxiliary actuator - at an ideal cutting plane **lapping** a trailing edge (21a) of said first gripping member (21), said auxiliary actuator (32) being configured for moving the cutter (31) itself between:
- a rest position, wherein a blade of the cutter is distanced from the film portion engaged by said first and second gripping members, and
- an operative position, distanced from said rest position, such operative position being disposed so that the blade of the cutter must move along an ideal cutting plane and crosses the film for arriving to the same operative position.

2. Apparatus according to claim 1, comprising a stop element (33) configured for cooperating with the upper tool (14) and holding the film portion (15) positioned below the upper tool (14) itself, wherein the stop element (33) and upper tool (14) are movable with respect to each other between at least one released condition, wherein the stop element (33) is distanced with respect to the upper tool (14), and a gripped condition, wherein the stop element (33) is approached with respect to the upper tool (14) and is capable of blocking a peripheral area of the film portion (15) against an abutment surface (14b) of the upper tool (14) .

3. Apparatus according to claim 2, wherein:
- the upper tool (14) defines inside at least one cavity (34) open downwardly and exhibiting a dome-shaped active surface (14a), or
- the upper tool (14) exhibits a plate shape with a flat active surface (14a);
wherein the active surface (14a) is perimetrally delimited by said abutment surface (14b) which exhibits a shape defining one or more annular-shaped surfaces, optionally, the upper tool (14) comprises a base body (14') and one or more walls (14") emerging from the base body (14') and defining with this latter said at least one cavity (34), the abutment surface (14b) being defined below the wall (14") of the upper tool (14).

4. Apparatus according to anyone of the preceding claims, wherein:
- the first gripping member (21), optionally supported by the upper tool (14), operates at an inlet area of said film in the packaging station (5),
- the second gripping member (25), optionally supported by the upper tool (14), is movable, optionally away and towards, with respect to the first gripping member (21) along an operative stroke (C) having an extension sufficient to position the film portion (15) below the overall active surface (14a) of the upper tool (14),
said second gripping member (25) being movable between:
- a first position, wherein the second gripping member is approached to the first gripping member (21), and
- a second position, wherein the second gripping member and first gripping member are distanced by said operative stroke (C).

5. Apparatus according to claim 4, wherein in the closed condition of the second gripping member (25), when said second gripping member is in said first position, such second gripping member is configured for grippingly acting on an edge (15a) of said film portion (15) directly adjacent to a transversal band on which the first gripping member (21) in the respective closed condition is configured for acting.

6. Apparatus according to claim 4 or 5, comprising at least two second gripping members (25) each configured for moving between a respective closed condition, wherein grippingly acts on a respective edge (15a) of said film portion (15), and a respective open condition, wherein does not grippingly act on said respective edge; optionally wherein each of said second gripping members is active at a respective side of the upper tool (14) and is destined to grippingly act on a respective lateral edge of said film portion;
each of said second gripping members (25) being movable away and towards, with respect to the first gripping member (21) for disposing said film portion (15) into the packaging station (5) and below said upper tool by acting on respective lateral opposite edges of said film.

7. Apparatus according to anyone of the preceding claims, wherein the first gripping member (21) comprises:
- a lower plate (22) and upper plate (23) movable with respect to each other for defining the open condition of the first gripping member, wherein the upper plate (23) is distanced from the lower plate (22) in order to enable the film to freely pass, and the closed condition of the first gripping member, wherein the upper plate (23) is approached to the lower plate (22) for grippingly closing at least a film transversal band;
- at least one first gripping actuator (24) active on at least one between the lower plate (22) and upper plate (23) of the first gripping member (21) for moving such plates between the respective open and closed conditions of the first gripping member;
and wherein the second gripping member (25) comprises:
- a lower clamp (26) and upper clamp (27) movable with respect to each other between the open condition of the second gripping member, wherein the upper clamp is distanced from the lower clamp in order to enable the film to freely pass, and the closed condition of the second gripping member, wherein the upper clamp is approached to the lower clamp for grippingly close at least one edge of said **film**;
- at least one second gripping actuator (28), active on at least one between the lower clamp (26) and upper clamp (27) of the second gripping member for moving such clamps between the respective open and closed conditions of the second gripping member.

8. Apparatus according to claim 7, wherein:
- the lower plate (22) and upper plate (23) of the first gripping member (21) exhibit each a respective flat active face (22a, 23a) destined to contact said film (16), and
- the lower clamp (26) and upper clamp (27) of each second gripping member (25) exhibit each a respective flat active face (26a, 27a) destined to contact said film;
and wherein:
- the lower plate (22) and upper plate (23) of the first gripping member (21) exhibit a perimeter having:
∘ a trailing edge (21a) facing the upper tool,
∘ a leading edge (21b) opposite to the trailing edge (21a), and
∘ two sides (21c) opposite to each other joining the leading edge (21b) to the trailing edge (21a), wherein the trailing edge (21a) exhibits a rectilinear central portion and a depression (21d) at each of the two opposite sides (21c) so that each plate (22, 23) exhibits a dimension, measured parallel to said advancement direction (B) of the film, greater in a central area, than the two lateral areas of the plate itself, optionally wherein the perimeter of the upper plate (23) is equal to the one of the lower plate (22) and exhibits a polygonal shape, the leading edge (21b) and trailing edge (21a) being rectilinear and parallel,
- the lower clamp (26) and upper clamp (27) of each second gripping member (25) are configured for being inserted at a respective of said depressions (21d) present on the trailing edge (21a) of the upper and lower plates of the gripping member (21),said upper clamp and lower clamp exhibiting a perimeter countershaped to the shape of the respective depression (21d) present on the trailing edge of the perimeter of the upper and lower plates of the first gripping member,
optionally, the lower clamp and upper clamp of each second gripping member exhibits a rectangular-shaped perimeter.

9. Apparatus according to anyone of the preceding claims, wherein the auxiliary actuator (32)is borne by the upper tool.

10. Apparatus according to anyone of claims from 2 to 9, wherein said stop element (33) comprises a perimetral frame (35), configured for interposing between the lower tool (12) and the upper tool (14), said stop element (33), optionally said frame (35) of the stop element (33), comprising at least one through opening (36) and at least one upper surface (33a) destined to cooperate with the abutment surface (14b) of the upper tool for blocking a perimetral area of the film portion (15) when the upper tool and stop element are in said gripped condition,
wherein the perimetral frame (35) exhibits opposite recesses (35a) which, when the gripping element (33) is in said gripped condition and each second gripping member (25) is at the end of said operative stroke (C) away from the first gripping member (21), are each configured for housing at least partially a respective second gripping member (25).

11. Apparatus according to anyone of the preceding claims, wherein the upper tool (14) comprises:
- at least one heater (50) configured for heating at least said active surface (14a), optionally both the abutment surface (14b) and active surface (14a) of the upper tool;
- an attracting device (51) configured for attracting at least part of the film portion (15) in contact with said active surface of the upper tool, optionally said attracting device (51) comprising a plurality of suctioning openings (52) distributed at the active surface and put in fluid communication with said suctioning device (45, 53) or with a further suctioning device;
wherein the control unit (100) is connected to the attracting device (51) and to the heater (50) and is configured for performing a step of deforming the film portion:
- commanding the heater (50) to determine the heating at least of the active surface (14a) of the upper tool,
- commanding the attracting device (51) to attract against the active surface of the upper tool at least part of the film portion, particularly at least part of the film portion radially inside the abutment surface, when the stop element (33) and upper tool (14) are in a gripped condition,
- synchronizing the command of the heater (50) with the command of the attracting device (51) for performing a heating of the film portion (15) before and/or during said attraction exerted by the attracting device,
optionally wherein said step of deforming the film portion (15) is performed before or simultaneously with the step of evacuating the gas from the packaging chamber and/or of injecting gas into the packaging chamber (17).

12. Process of packaging a product (P) disposed on a support (2) using said apparatus (1) according to anyone of the preceding claims, said process comprising:
- moving one or more supports (2) along a predetermined advancement direction (A) into a packaging station (5) having:
∘ a lower tool (12) configured for receiving one or more of said supports (2),
∘ an upper tool (14) configured for receiving at least one film portion (15) to be associated to said one or more supports (2),
wherein the upper and lower tools (14, 12) are movable from each other between at least one distanced condition, at which the lower tool and upper tool are configured for enabling the film portion (15) and support (2) to enter the packaging station (5), and at least one approached condition, for positioning a film portion (15) at the upper tool (14), optionally below the upper tool (14), the step of positioning the film portion (15) providing the following sub-steps:
■ engaging a transversal band (16a) of a film (16) to be positioned below the upper tool (14);
■ moving said transversal band (16a) along an advancement direction (B) for a predetermined stroke for defining in this way the film portion (15) below an active surface (14a) of the upper tool;
■ blocking said film portion (15) with respect to the upper tool (14);
■ engaging a further transversal band of the film disposed, with reference to the advancement direction (B) of the film, upstream the film portion (15) positioned below the upper tool (14);
- taking the lower tool and upper tool to an approached condition;
- tightly fixing the film portion (15) to one or more underlying supports (2);
- cutting the film (16) in order to separate the film portion (15) positioned below the upper tool with respect to the further transversal band (16a) of the film.

13. Process according to claim 12, wherein the advancement direction (A) of the supports (2) is parallel to the advancement direction (B) of said film (16), wherein the step of cutting the film is performed by a cutter (31) movable along a plane extending transversally, particularly normal, to said advancement direction (B) of said film.

14. Process according to claim 12 or 13, comprising a step of blocking the film portion (15) to the upper tool (14) by a stop element (33), such blocking step enables to hold the film portion (15) below the upper tool (14) and in contact with the abutment surface (14b) of said upper tool (14),
wherein the process comprises at least one of the following steps:
- removing gas from the packaging chamber (17), comprising the following sub-steps:
∘ bringing in contact the stop element (33) **with the upper** tool in order to block the film portion to said upper tool,
∘ disposing the upper and lower tools in the approached condition at which said packaging chamber is defined,
∘ suctioning gas into the packaging chamber (17) through a channel (41) made on the stop element (33) ,
- injecting gas into the packaging chamber, comprising the following sub-steps:
∘ bringing in contact the stop element (33) with the upper tool in order to block the film portion to said upper tool,
∘ disposing the upper and lower tools in the approached condition at which said packaging chamber is defined,
∘ injecting gas into the packaging chamber (17) through a channel (41) made on the stop element (33) ,
and wherein the step of tightly fixing the film portion (15) to the support (2) in order to form a finished package comprises:
- closing said channel (41),
- bringing in contact and tightly heat-sealing at least one perimetral edge of the film portion (15) to the flange or perimetral edge of the support (2).

## Patentansprüche

1. Vorrichtung zum Verpacken eines Produktes (P), welches auf einem Träger (2) angeordnet ist, wobei die Vorrichtung (1) umfasst:
- einen Tragrahmen (3),
- eine Fördereinrichtung (4), welche mit dem Tragrahmen (3) in Eingriff steht und dazu konfiguriert ist, einen oder mehrere Träger (2) entlang einer vorbestimmten Förderrichtung (A) zu bewegen:
- eine Verpackungsstation (5), welche aufweist:
■ ein unteres Werkzeug (12), welches dazu konfiguriert ist, einen oder mehrere der Träger (2) aufzunehmen,
■ ein oberes Werkzeug (14), welches dazu konfiguriert ist, wenigstens einen Filmabschnitt (15) aufzunehmen, welcher dem einen oder den mehreren Trägern (2) zuzuordnen ist, wobei das obere und das untere Werkzeug (12, 14) zueinander bewegbar sind zwischen wenigstens einem beabstandeten Zustand, bei welchem das untere Werkzeug und das obere Werkzeug dazu konfiguriert sind, dem Filmabschnitt (15) und dem Träger (2) zu ermöglichen, in die Verpackungsstation einzutreten, und wenigstens einem angenäherten Zustand,
- eine Bewegungsvorrichtung (19), welche dazu konfiguriert ist, einen kontinuierlichen Film (16) von einer Lieferquelle (20) aufzunehmen und den Filmabschnitt (15) an dem oberen Werkzeug zu positionieren, wobei die Bewegungsvorrichtung (19) aufweist:
■ wenigstens ein erstes Greifelement (21), welches zwischen einem geschlossenen Zustand, wobei solches erstes Greifelement greifend auf den Film einwirkt, und einem offenen Zustand konfigurierbar ist, wobei solches erstes Greifelement nicht auf den Film einwirkt,
■ wenigstens ein zweites Greifelement (25), welches ebenfalls zwischen einem entsprechenden geschlossenen Zustand, wobei solches zweites Element greifend auf den Film einwirkt, und einem entsprechenden offenen Zustand konfigurierbar ist, wobei solches zweites Element nicht greifend auf den Film einwirkt, wobei das zweite Greifelement (25) in Bezug auf das erste Greifelement (21) entlang einer Förderrichtung (B) des Films bewegbar ist und dazu konfiguriert ist, den Filmabschnitt (15) in der Verpackungsstation (5) und unterhalb des oberen Werkzeugs (14) anzuordnen,
- eine Schneideinrichtung (31), welche transversal in Bezug auf die Förderrichtung (B) des zweiten Greifelements (25) bewegbar ist und dazu konfiguriert ist, den Filmabschnitt (15), welcher unterhalb des oberen Werkzeugs (14) positioniert ist, von dem kontinuierlichen Film (16) zu trennen,
**gekennzeichnet durch** die Tatsachse, dass die Vorrichtung ferner einen Hilfsaktuator (32) umfasst, welcher an der Schneideinrichtung (31) wirkt,
wobei die Schneideinrichtung - einer Betätigung des Hilfsaktuators folgend - entlang einer idealen Schneidebene bewegbar ist, welche einen hinteren Rand (21a) des ersten Greifelements (21) überlappt, wobei der Hilfsaktuator (32) dazu konfiguriert ist, die Schneideinrichtung (31) selbst zu bewegen zwischen:
- einer Ruheposition, wobei eine Klinge der Schneideinrichtung von dem Filmabschnitt beabstandet ist, welcher durch das erste und das zweite Greifelement in Eingriff genommen ist, und
- einer Arbeitsposition, welche von der Ruheposition beabstandet ist, wobei solche Arbeitsposition derart angeordnet ist, dass sich die Klinge der Schneideinrichtung entlang einer idealen Schneidebene bewegen muss und den Film kreuzt, um die gleiche Arbeitsposition zu erreichen.

2. Vorrichtung nach Anspruch 1, umfassend ein Anschlagelement (33), welches dazu konfiguriert ist, mit dem oberen Werkzeug (14) zusammenzuwirken und den Filmabschnitt (15) zu halten, welcher unterhalb des oberen Werkzeugs (14) selbst positioniert ist, wobei das Anschlagelement (33) und das obere Werkzeug (14) zueinander bewegbar sind zwischen wenigstens einem Freigabezustand, wobei das Anschlagelement (33) in Bezug auf das obere Werkzeug (14) beabstandet ist, und einem Greifzustand, wobei das Anschlagelement (33) in Bezug auf das obere Werkzeug (14) angenähert ist und dazu in der Lage ist, einen Umfangsbereich des Filmabschnitts (15) gegen eine Anlagefläche (14b) des oberen Werkzeugs (14) zu blockieren.

3. Vorrichtung nach Anspruch 2, wobei:
- das obere Werkzeug (14) innen wenigstens einen Hohlraum (34) definiert, welcher nach unten hin offen ist und eine kuppelförmge Wirkfläche (14a) aufweist, oder
- das obere Werkzeug (14) eine plattenartige Form mit einer ebenen Wirkfläche (14a) aufweist;
wobei die Wirkfläche (14a) umfangsmäßig durch die Anlagefläche (14b) begrenzt ist, welche eine Form aufweist, welche eine oder mehrere ringförmige Flächen definiert, wobei optional das obere Werkzeug (14) einen Basiskörper (14') und eine oder mehrere Wände (14") umfasst, welche von dem Basiskörper (14') vorstehen und mit diesem letzteren den wenigstens einen Hohlraum (34) definieren, wobei die Anlagefläche (14b) unterhalb der Wand (14") des oberen Werkzeugs (14) definiert ist.

4. Vorrichtung nach einem der vorhergehenden Ansprüche, wobei:
- das erste Greifelement (21), welches optional durch das obere Werkzeug (14) getragen ist, an einem Einlassbereich des Films in der Verpackungsstation (5) arbeitet,
- das zweite Greifelement (25), welches optional durch das obere Werkzeug (14) getragen ist, in Bezug auf das erste Greifelement (21), optional von diesem Weg und auf dieses zu, entlang eines Arbeitshubs (C) bewegbar ist, welcher eine Erstreckung aufweist, welche ausreichend ist, um den Filmabschnitt (15) unterhalb der gesamten Wirkfläche (14a) des oberen Werkzeugs (14) zu positionieren,
wobei das zweite Greifelement (25) bewegbar ist zwischen:
- einer ersten Position, wobei das zweite Greifelement an das erste Greifelement (21) angenähert ist, und
- einer zweiten Position, wobei das zweite Greifelement und das erste Greifelement um den Arbeitshub (C) beabstandet sind.

5. Vorrichtung nach Anspruch 4, wobei in dem geschlossenen Zustand des zweiten Greifelements (25), wenn sich das zweite Greifelement in der ersten Position befindet, solches zweite Greifelement dazu konfiguriert ist, greifend auf einen Rand (15a) des Filmabschnitts (15) einzuwirken, welcher einem transversalen Band unmittelbar benachbart ist, an welchem das erste Greifelement (21) in dem entsprechenden geschlossenen Zustand einzuwirken konfiguriert ist.

6. Vorrichtung nach Anspruch 4 oder 5, umfassend wenigstens zwei zweite Greifelemente (25), welche jeweils dazu konfiguriert sind, sich zwischen einem entsprechenden geschlossenen Zustand, wobei es auf einen entsprechenden Rand (15a) des Filmabschnitts (15) greifend einwirkt, und einem entsprechenden offenen Zustand zu bewegen, in welchem es auf den entsprechenden Rand nicht greifend einwirkt; wobei optional jedes der zweiten Greifelemente an einer entsprechenden Seite des oberen Werkzeugs (14) wirkt und dazu bestimmt ist, greifend auf einen entsprechenden lateralen Rand des Filmabschnitts einzuwirken,
wobei jedes der zweiten Greifelemente (25) in Bezug auf das erste Greifelement (21) von diesem weg und auf dieses zu bewegbar ist, um den Filmabschnitt (15) durch Einwirken auf entsprechende lateral entgegengesetzte Ränder des Films in der Verpackungsstation (5) und unterhalb des oberen Werkzeugs anzuordnen.

7. Vorrichtung nach einem der vorhergehenden Ansprüche, wobei das erste Greifelement (21) umfasst:
- eine untere Platte (22) und eine obere Platte (23), welche zueinander bewegbar sind, um den offenen Zustand des ersten Greifelements, wobei die obere Platte (23) von der unteren Platte (22) beabstandet ist, um dem Film zu erlauben, ungehindert zu passieren, und den geschlossenen Zustand des ersten Greifelements zu definieren, wobei die obere Platte (23) an die untere Platte (22) angenähert ist, um wenigstens ein transversales Filmband greifend zu verschließen;
- wenigstens einen ersten Greifaktuator (24), welcher wenigstens zwischen der unteren Platte (22) und der oberen Platte (23) des ersten Greifelements (21) wirkt, um solche Platten zwischen dem entsprechenden offenen und dem entsprechenden geschlossenen Zustand des ersten Greifelements zu bewegen;
und wobei das zweite Greifelement (25) umfasst:
- eine untere Klemmeinrichtung (26) und eine obere Klemmeinrichtung (27), welche zueinander bewegbar sind zwischen dem offenen Zustand des zweiten Greifelements, wobei die obere Klemmeinrichtung von der unteren Klemmeinrichtung beabstandet ist, um dem Film zu erlauben, ungehindert zu passieren, und dem geschlossenen Zustand des zweiten Greifelements, wobei die obere Klemmeinrichtung an die untere Klemmeinrichtung angenähert ist, um wenigstens einen Rand des Films zu verschließen;
- wenigstens einen zweiten Greifaktuator (28), welcher an wenigstens einer zwischen der unteren Klemmeinrichtung (26) und der oberen Klemmeinrichtung (27) des zweiten Greifelements wirkt, um solche Klemmeinrichtungen zwischen dem entsprechenden offenen und dem entsprechenden geschlossenen Zustand des zweiten Greifelements zu bewegen.

8. Vorrichtung nach Anspruch 7, wobei:
- die untere Platte (22) und die obere Platte (23) des ersten Greifelements (21) jeweils eine entsprechende ebene Wirkfläche (22a, 23a) aufweisen, welche dazu bestimmt ist, den Film (16) zu kontaktieren, und
- die untere Klemmeinrichtung (26) und die obere Klemmeinrichtung (27) jedes zweiten Greifelements (25) eine entsprechende ebene Wirkfläche (26a, 27a) aufweisen, welche dazu bestimmt ist, den Film zu kontaktieren;
und wobei:
- die untere Platte (22) und die obere Platte (23) des ersten Greifelements (21) einen Umfang aufweisen, welcher aufweist:
∘ einen hinteren Rand (21a), welcher dem oberen Werkzeug zugewandt ist,
∘ einen vorderen Rand (21b), welcher dem hinteren Rand (21a) entgegengesetzt ist, und
∘ zwei Seiten (21c), welcher einander entgegengesetzt sind und den vorderen Rand (21b) mit dem hinteren Rand (21a) verbinden, wobei der hintere Rand (21a) einen rechteckigen zentralen Abschnitt und eine Vertiefung (21d) an jeder der beiden entgegengesetzten Seiten (21c) aufweist, so dass jede Platte (22, 23) eine Abmessung aufweist, welche, gemessen parallel zu der Förderrichtung (B) des Films, in einem zentralen Bereich größer ist als die beiden lateralen Bereiche der Platte selbst, wobei optional der Umfang der oberen Platte (23) gleich demjenigen der unteren Platte (22) ist und eine polygonartige Form aufweist, wobei der vordere Rand (21b) und der hintere Rand (21a) rechteckig und parallel sind,
- die untere Klemmeinrichtung (26) und die obere Klemmeinrichtung (27) jedes zweiten Greifelements (25) dazu konfiguriert sind, an einer entsprechenden der Vertiefungen (21d) eingesetzt zu sein, welche an dem hinteren Rand (21a) der oberen und der unteren Platte des Greifelements (21) vorhanden sind, wobei die obere Klemmeinrichtung und die untere Klemmeinrichtung einen Umfang aufweisen, welcher zu der Form der entsprechenden Vertiefung (21d) gegengeformt ist, welche an dem hinteren Rand des Umfangs der oberen und der unteren Platte des ersten Greifelements vorhanden ist, wobei optional die untere Klemmeinrichtung und die obere Klemmeinrichtung jedes zweiten Greifelements einen rechteckig geformten Umfang aufweisen.

9. Vorrichtung nach einem der vorhergehenden Ansprüche, wobei der Hilfsaktuator (32) durch das obere Werkzeug getragen ist.

10. Vorrichtung nach einem der Ansprüche 2 bis 9, wobei das Anschlagelement (33) einen Umfangsrahmen (35) umfasst, welcher dazu konfiguriert ist, zwischen dem unteren Werkzeug (12) und dem oberen Werkzeug (14) eingefügt zu sein, wobei das Anschlagelement (33), optional der Rahmen (35) des Anschlagelements (33), wenigstens eine Durchgangsöffnung (36) und wenigstens eine obere Fläche (33a) umfasst, welche dazu bestimmt ist, mit der Anlagefläche (14b) des oberen Werkzeugs zusammenzuwirken, um einen Umfangsbereich des Filmabschnitts (15) zu blockieren, wenn sich das obere Werkzeug und das Anschlagelement in dem Greifzustand befinden, wobei der Umfangsrahmen (35) entgegengesetzte Aussparungen (35a) aufweist, welche, wenn sich das Greifelement (33) in dem Greifzustand befindet und sich jedes zweite Greifelement (25) an dem Ende des Arbeitshubes (C) weg von dem ersten Greifelement (21) befindet, jeweils dazu konfiguriert sind, ein entsprechendes zweites Greifelement (25) wenigstens teilweise aufzunehmen.

11. Vorrichtung nach einem der vorhergehenden Ansprüche, wobei das obere Werkzeug (14) umfasst:
- wenigstens eine Heizeinrichtung (50), welche dazu eingerichtet ist, wenigstens die Wirkfläche (14a), optional sowohl die Anlagefläche (14b) als auch die Wirkfläche (14a) des oberen Werkzeugs, zu heizen;
- eine Anziehungsvorrichtung (51), welche dazu konfiguriert ist, wenigstens einen Teil des Filmabschnitts (15) in Kontakt mit der Wirkfläche des oberen Werkzeugs anzuziehen, wobei die Anziehungsvorrichtung (51) optional eine Mehrzahl von Saugöffnungen (52) umfasst, welche an der Wirkfläche verteilt sind und mit der Saugvorrichtung (45, 53) oder mit einer weiteren Saugvorrichtung in Fluidkommunikation gesetzt sind;
wobei die Steuereinheit (100) mit der Anziehungsvorrichtung (51) und der Heizeinrichtung (50) verbunden ist und dazu konfiguriert ist, einen Schritt eines Verformens des Filmabschnitts durchzuführen:
- Befehligen der Heizeinrichtung (50), das Heizen wenigstens der Wirkfläche (14a) des oberen Werkzeugs zu bestimmen,
- Befehligen der Anziehungsvorrichtung (51) wenigstens einen Teil des Filmabschnitts, insbesondere wenigstens einen Teil des Filmabschnitts radial innerhalb der Anlagefläche, gegen die Wirkfläche des oberen Werkzeugs anzuziehen, wenn sich das Anschlagelement (33) und das obere Werkzeug (14) in einem Greifzustand befinden,
- Synchronisieren des Befehls der Heizeinrichtung (50) mit dem Befehl der Anziehungsvorrichtung (51), um ein Heizen des Filmabschnitts (15) vor und/oder während der Anziehung durchzuführen, welche durch die Anziehungsvorrichtung ausgeübt wird, wobei optional der Schritt des Verformens des Filmabschnitts (15) vor oder gleichzeitig mit dem Schritt eines Evakuierens des Gases aus der Verpackungskammer und/oder eines Injizierens von Gas in die Verpackungskammer (17) durchgeführt wird.

12. Verfahren zum Verpacken eines Produktes (P), welches auf einem Träger (2) angeordnet ist, unter Verwendung der Vorrichtung (1) nach einem der vorhergehenden Ansprüche, wobei das Verfahren umfasst:
- Bewegen eines oder mehrerer Träger (2) entlang einer vorbestimmten Förderrichtung (A) in eine Verpackungsstation (5), welche aufweist:
■ ein unteres Werkzeug (12), welches dazu konfiguriert ist, einen oder mehrere der Träger (2) aufzunehmen,
■ ein oberes Werkzeug (14), welches dazu konfiguriert ist, wenigstens einen Filmabschnitt (15) aufzunehmen, welcher dem einen oder den mehreren Trägern (2) zuzuordnen ist,
wobei das obere und das untere Werkzeug (14, 12) zueinander bewegbar sind zwischen wenigstens einem beabstandeten Zustand, bei welchem das untere Werkzeug und das obere Werkzeug dazu konfiguriert sind, dem Filmabschnitt (15) und dem Träger (2) zu ermöglichen, in die Verpackungsstation einzutreten, und wenigstens einem angenäherten Zustand zum Positionieren eines Filmabschnitts (15) an dem oberen Werkzeug (14), optional unterhalb des oberen Werkzeugs (14), wobei der Schritt des Positionierens des Filmabschnitts (15) die folgenden Unterschritte bereitstellt:
■ Ineingriffnehmen eines transversalen Bandes (16a) eines Films (16), welcher unterhalb des oberen Werkzeugs (14) zu positionieren ist;
▪ Bewegen des transversalen Bandes (16a) entlang einer Förderrichtung (B) für einen vorbestimmten Hub, um auf diese Weise den Filmabschnitt (15) unterhalb einer Wirkfläche (14a) des oberen Werkzeugs zu definieren;
▪ Blockieren des Filmabschnitts (15) in Bezug auf das obere Werkzeug (14);
▪ Ineingriffnehmen eines weiteren transversalen Bandes des Films, welches in Bezug auf die Förderrichtung (B) des Films stromaufwärts des Filmabschnitts (15) angeordnet ist, welcher unterhalb des oberen Werkzeugs (14) positioniert ist,
- Bringen des unteren Werkzeugs und des oberen Werkzeugs in einen angenäherten Zustand;
- festes Fixieren des Filmabschnitts (15) an einem oder mehreren darunterliegenden Trägern (2);
- Schneiden des Films (16), um den Filmabschnitt (15) zu trennen, welcher in Bezug auf das weitere transversale Band (16a) des Films unterhalb des oberen Werkzeugs positioniert ist.

13. Verfahren nach Anspruch 12, wobei die Förderrichtung (A) der Träger (2) parallel zu der Förderrichtung (B) des Films (16) ist, wobei der Schritt des Schneidens des Films durch eine Schneideinrichtung (31) durchgeführt wird, welche entlang einer Ebene bewegbar ist, welche sich transversal, insbesondere normal, zu der Förderrichtung (B) des Films erstreckt.

14. Verfahren nach Anspruch 12 oder 13, umfassend einen Schritt eines Blockierens des Filmabschnitts (15) an dem oberen Werkzeug (14) durch ein Anschlagelement (33), wobei solcher Blockierschritt ermöglicht, den Filmabschnitt (15) unterhalb des oberen Werkzeugs (14) und in Kontakt mit der Anlagefläche (14b) des oberen Werkzeugs (14) zu halten,
wobei das Verfahren wenigstens einen der folgenden Schritte umfasst:
- Entfernen von Gas aus der Verpackungskammer (17), umfassend die folgenden Unterschritte:
∘ Inkontaktbringen des Anschlagelements (33) mit dem oberen Werkzeug, um den Filmabschnitt an dem oberen Werkzeug zu blockieren,
∘ Anordnen des oberen und des unteren Werkzeugs in dem angenäherten Zustand, bei welchem die Verpackungskammer definiert wird,
∘ Saugen von Gas in die Verpackungskammer (17) durch einen Kanal (41), welcher an dem Anschlagelement (33) hergestellt ist,
- Injizieren von Gas in die Verpackungskammer, umfassend die folgenden Unterschritte:
∘ Inkontaktbringen des Anschlagelements (33) mit dem oberen Werkzeug, um den Filmabschnitt an dem oberen Werkzeug zu blockieren,
∘ Anordnen des oberen und des unteren Werkzeugs in dem angenäherten Zustand, bei welchem die Verpackungskammer definiert wird,
∘ Injizieren von Gas in die Verpackungskammer (17) durch einen Kanal (41), welcher an dem Anschlagelement (33) hergestellt ist,
und wobei der Schritt des festen Fixierens des Filmabschnitts (15) an dem Träger (2), um eine fertige Verpackung zu bilden, umfasst:
- Verschließen des Kanals (41),
- Inkontaktbringen und dichtes Wärmeversiegeln wenigstens eines Umfangsrands des Filmabschnitts (15) mit dem Flansch oder dem Umfangsrand des Trägers (2).

## Revendications

1. Appareil d'emballage d'un produit (P) disposé sur un support (2), ledit appareil (1) comprenant :
- un cadre de support (3),
- un convoyeur (4), engagé avec le cadre de support (3) et conçu pour déplacer un ou plusieurs supports (2) le long d'un sens d'avancement (A) prédéterminé,
- un poste d'emballage (5) ayant :
∘ un outil inférieur (12) conçu pour recevoir l'un ou plusieurs desdits supports (2),
∘ un outil supérieur (14) conçu pour recevoir au moins une portion de film (15) à associer audit un ou plusieurs supports (2),
les outils supérieur et inférieur (12, 14) étant mobiles l'un par rapport à l'autre entre au moins un état éloigné, auquel l'outil inférieur et l'outil supérieur sont configurés pour permettre à la portion de film (15) et au support (2) d'entrer dans le poste d'emballage, et au moins un état approché,
- un dispositif de mouvement (19) conçu pour recevoir un film continu (16) à partir d'une source d'alimentation (20) et positionner ladite portion de film (15) au niveau de l'outil supérieur, le dispositif de mouvement (19) faisant preuve :
∘ d'au moins un premier élément de préhension (21) configurable entre un état fermé, dans lequel un tel premier élément de préhension agit avec préhension sur ledit film, et un état ouvert, dans lequel un tel premier élément de préhension n'agit pas sur ledit film,
∘ au moins un second élément de préhension (25) également configurable entre un état fermé respectif, dans lequel un tel second élément agit avec préhension sur ledit film, et un état ouvert respectif, dans lequel un tel second élément n'agit pas avec préhension sur ledit film, ledit second élément de préhension (25) étant mobile par rapport au premier élément de préhension (21) le long d'un sens d'avancement (B) dudit film et étant conçu pour la disposition de ladite portion de film (15) dans le poste d'emballage (5) et en-dessous dudit outil supérieur (14),
- un dispositif de coupe (31) mobile de manière transversale par rapport au sens d'avancement (B) du second élément de préhension (25) et conçu pour la séparation dudit film continu (16) de ladite portion de film (15) positionnée en-dessous de l'outil supérieur (14),
**caractérisé par le fait que** l'appareil comprend en outre un dispositif d'actionnement auxiliaire (32) actif sur le dispositif de coupe (31),
le dispositif de coupe étant mobile - suite à une opération dudit dispositif d'actionnement auxiliaire - au niveau d'un plan de coupe idéal chevauchant au niveau d'un rebord arrière (21a) dudit premier élément de préhension (21), ledit dispositif d'actionnement auxiliaire (32) étant configuré pour déplacer le dispositif de coupe (31) lui-même entre :
- une position de repos, dans laquelle une lame du dispositif de coupe est éloignée de la portion de film engagée par lesdits premier et second élément de préhension, et
- une position de fonctionnement, éloignée de ladite position de repos, une telle position de fonctionnement étant disposée de sorte que la lame du dispositif de coupe doit se déplacer le long d'un plan de coupe idéal et traverse le film pour parvenir à la même position de fonctionnement.

2. Appareil selon la revendication 1, comprenant un élément d'arrêt (33) conçu pour coopérer avec l'outil supérieur (14) et maintenir la portion de film (15) positionnée en-dessous de l'outil supérieur (14) lui-même, l'élément d'arrêt (33) et l'outil supérieur (14) étant mobiles l'un par rapport à l'autre entre au moins un état libéré, dans lequel l'élément d'arrêt (33) est éloigné par rapport à l'outil supérieur (14), et un état de préhension, dans lequel l'élément d'arrêt (33) est approché par rapport à l'outil supérieur (14) et est capable de bloquer une surface périphérique de la portion de film (15) contre une surface de butée (14b) de l'outil supérieur (14).

3. Appareil selon la revendication 2 :
- l'outil supérieur (14) définissant à l'intérieur au moins une cavité (34) ouverte vers le bas et faisant preuve d'une surface active (14a) en forme de dôme, ou
- l'outil supérieur (14) faisant preuve d'une forme plate avec une surface active (14a) plate ;
la surface active (14a) étant délimitée dans le périmètre par ladite surface de butée (14b) qui fait preuve d'une forme définissant une ou plusieurs surfaces de forme annulaire, éventuellement, l'outil supérieur (14) comprenant un corps de base (14') et une ou plusieurs parois (14") émergeant du corps de base (14') et définissant, avec cette dernière, ladite au moins une cavité (34), la surface de butée (14b) étant définie en-dessous de la paroi (14") de l'outil supérieur (14).

4. Appareil selon l'une quelconque des revendications précédentes :
- le premier élément de préhension (21), supporté éventuellement par l'outil supérieur (14), fonctionnant au niveau d'une zone d'orifice d'entrée dudit film dans le poste d'emballage (5),
- le second élément de préhension (25), éventuellement supporté par l'outil supérieur (14), étant mobile, éventuellement à l'opposé, et vers, par rapport au premier élément de préhension (21), le long d'une course de fonctionnement (C) ayant une extension suffisante pour positionner la portion de film (15) en-dessous de la surface active (14a) globale de l'outil supérieur (14), ledit second élément de préhension (25) étant mobile entre :
- une première position, dans laquelle le second élément de préhension est approché du premier élément de préhension (21), et
- une seconde position, dans laquelle le second élément de préhension et le premier élément de préhension sont éloignés de ladite course de fonctionnement (C).

5. Appareil selon la revendication 4, dans l'état fermé du second élément de préhension (25), lorsque ledit second élément de préhension se trouve dans ladite première position, un tel second élément de préhension est conçu pour agir avec préhension sur un bord (15a) de ladite portion de film (15) directement adjacente à une bande transversale sur laquelle le premier élément de préhension (21) dans l'état fermé respectif est configuré pour agir.

6. Appareil selon la revendication 4 ou 5, comprenant au moins deux seconds éléments de préhension (25) chacun configuré pour se déplacer entre un état fermé respectif, dans lequel il agit avec préhension sur un bord (15a) respectif de ladite portion de film (15), et un état ouvert respectif, dans lequel il n'agit pas avec préhension sur ledit bord respectif ; éventuellement dans lequel chacun desdits seconds éléments de préhension est actif au niveau d'un côté respectif de l'outil supérieur (14) et est destiné pour agir avec préhension sur un bord latéral respectif de ladite portion de film ;
chacun desdits seconds éléments de préhension (25) étant mobile à l'opposé, et vers, par rapport au premier élément de préhension (21), pour disposer ladite portion de film (15) dans le poste d'emballage (5) et en-dessous dudit outil supérieur en agissant sur lesdits bords opposés latéraux respectifs dudit film.

7. Appareil selon l'une quelconque des revendications précédentes, le premier élément de préhension (21) comprenant :
- une plaque inférieure (22) et une plaque supérieure (23) mobiles l'une par rapport à l'autre pour définir l'état ouvert du premier élément de préhension, la plaque supérieure (23) étant éloignée de la plaque inférieure (22) afin de permettre au film de passer librement, et l'état fermé du premier élément de préhension, la plaque supérieure (23) étant approchée de la plaque inférieure (22) pour fermer avec préhension au moins une bande transversale de film ;
- au moins un premier dispositif d'actionnement de préhension (24) actif sur au moins l'une entre la plaque inférieure (22) et la plaque supérieure (23) du premier élément de préhension (21) pour déplacer de telles plaques entre les états ouvert et fermé respectifs du premier élément de préhension ; et
le second élément de préhension (25) comprenant :
- une pince inférieure (26) et une pince supérieure (27) mobiles l'une par rapport à l'autre entre l'état ouvert du second élément de préhension, la pince supérieure étant éloignée de la pince inférieure afin de permettre au film de passer librement, et l'état fermé du second élément de préhension, la pince supérieure étant approchée de la pince inférieure pour fermer avec préhension au moins un bord dudit film ;
- au moins un second dispositif d'actionnement de préhension (28), actif sur au moins l'une entre la pince inférieure (26) et la pince supérieure (27) du second élément de préhension pour déplacer de telles pinces entre les états ouvert et fermé respectifs du second élément de préhension.

8. Appareil selon la revendication 7 :
- la plaque inférieure (22) et la plaque supérieure (23) du premier élément de préhension (21) faisant preuve chacune d'une face active plate respective (22a, 23a) destinée à entrer en contact avec ledit film (16), et
- la pince inférieure (26) et la pince supérieure (27) de chaque second élément de préhension (25) faisant preuve chacune d'une face active plate respective (26a, 27a) destinée à entrer en contact avec ledit film ;
et :
- la plaque inférieure (22) et la plaque supérieure (23) du premier élément de préhension (21) faisant preuve d'un périmètre ayant :
∘ un rebord arrière (21a) faisant face à l'outil supérieur,
∘ un rebord avant (21b) opposé au rebord arrière (21a), et
∘ deux côtés (21c) opposés l'un par rapport à l'autre joignant le rebord avant (21b) au rebord arrière (21a), le rebord arrière (21a) faisant preuve d'une portion centrale rectiligne et d'une dépression (21d) au niveau de chacun des deux côtés (21c) opposés de sorte que chaque plaque (22, 23) fait preuve d'une dimension, mesurée parallèle audit sens d'avancement (B) du film, supérieure dans une zone centrale, aux deux zones latérales de la plaque elle-même, éventuellement le périmètre de la plaque supérieure (23) étant égal à l'une de la plaque inférieure (22) et faisant preuve d'une forme polygonale, le rebord avant (21b) et le rebord arrière (21a) étant rectilignes et parallèles,
- la pince inférieure (26) et la pince supérieure (27) de chaque second élément de préhension (25) étant conçues pour être insérées au niveau de une respective desdites dépressions (21d) présentes sur le rebord arrière (21a) des plaques supérieure et inférieure de l'élément de préhension (21), lesdites pince supérieure et pince inférieure faisant preuve d'un périmètre en contre-forme par rapport à la forme de la dépression (21d) respective présente sur le rebord arrière du périmètre des plaques supérieure et inférieure du premier élément de préhension,
éventuellement, la pince inférieure et la pince supérieure de chaque second élément de préhension faisant preuve d'un périmètre de forme rectangulaire.

9. Appareil selon l'une quelconque des revendications précédentes, le dispositif d'actionnement auxiliaire (32) étant supporté par l'outil supérieur.

10. Appareil selon l'une quelconque des revendications de 2 à 9, ledit élément d'arrêt (33) comprenant un cadre (35) dans le périmètre, conçu pour s'interposer entre l'outil inférieur (12) et l'outil supérieur (14),
ledit élément d'arrêt (33), éventuellement ledit cadre (35) de l'élément d'arrêt (33), comprenant au moins une ouverture traversante (36) et au moins une surface supérieure (33a) destinée à coopérer avec la surface de butée (14b) de l'outil supérieur pour bloquer une zone dans le périmètre de la portion de film (15) lorsque l'outil supérieur et l'élément d'arrêt se trouvent dans ledit état de préhension,
le cadre (35) dans le périmètre faisant preuve de renfoncements opposés (35a) qui, lorsque l'élément de préhension (33) se trouve dans ledit état de préhension et que chaque second élément de préhension (25) se trouve à l'extrémité de ladite course de fonctionnement (C) à l'opposé du premier élément de préhension (21), ils sont chacun conçus pour loger au moins partiellement un second élément de préhension (25) respectif.

11. Appareil selon l'une quelconque des revendications précédentes, l'outil supérieur (14) comprenant :
- au moins un dispositif de chauffage (50) conçu pour chauffer au moins ladite surface active (14a), éventuellement à la fois la surface de butée (14b) et la surface active (14a) de l'outil supérieur ;
- un dispositif d'attraction (51) conçu pour attirer au moins une partie de la portion de film (15) en contact avec ladite surface active de l'outil supérieur, éventuellement ledit dispositif d'attraction (51) comprenant une pluralité d'ouvertures d'aspiration (52) réparties au niveau de la surface active et placées en communication fluidique avec ledit dispositif d'aspiration (45, 53) ou avec un dispositif d'aspiration supplémentaire ;
l'unité de commande (100) étant reliée au dispositif d'attraction (51) et au dispositif de chauffage (50) et étant conçue pour effectuer une étape de déformation de la portion de film :
- commandant au dispositif de chauffage (50) de déterminer le chauffage au moins de la surface active (14a) de l'outil supérieur,
- commandant au dispositif d'attraction (51) d'attirer contre la surface active de l'outil supérieur au moins une partie de la portion de film, particulièrement au moins une partie de la portion de film radialement à l'intérieur de la surface de butée, lorsque l'élément d'arrêt (33) et l'outil supérieur (14) se trouvent sous un état de préhension,
- synchronisant la commande du dispositif de chauffage (50) avec la commande du dispositif d'attraction (51) pour effectuer un chauffage de la portion de film (15) avant et/ou durant ladite attraction exercée par le dispositif d'attraction,
éventuellement ladite étape de déformation de la portion de film (15) étant effectuée avant ou simultanément à l'étape d'évacuation du gaz de la chambre d'emballage et/ou d'injection de gaz dans la chambre d'emballage (17).

12. Procédé d'emballage d'un produit (P) disposé sur un support (2) utilisant ledit appareil (1) selon l'une quelconque des revendications précédentes, ledit procédé comprenant :
- le déplacement d'un ou plusieurs supports (2) le long d'un sens d'avancement (A) prédéterminé dans un poste d'emballage (5) ayant :
∘ un outil inférieur (12) conçu pour recevoir l'un ou plusieurs desdits supports (2),
∘ un outil supérieur (14) conçu pour recevoir au moins une portion de film (15) à associer audit un ou plusieurs supports (2),
les outils supérieur et inférieur (14, 12) étant mobiles l'un par rapport à l'autre entre au moins un état éloigné, auquel l'outil inférieur et l'outil supérieur sont conçus pour permettre à la portion de film (15) et au support (2) de pénétrer dans le poste d'emballage (5), et au moins un état approché, pour le positionnement d'une portion de film (15) au niveau de l'outil supérieur (14), éventuellement en-dessous de l'outil supérieur (14), l'étape de positionnement de la portion de film (15) fournissant les sous-étapes suivantes :
■ engagement d'une bande transversale (16a) d'un film (16) à positionner en-dessous de l'outil supérieur (14) ;
■ déplacement de ladite bande transversale (16a) le long d'un sens d'avancement (B) sur une course prédéterminée pour définir de cette manière la portion de film (15) en-dessous d'une surface active (14a) de l'outil supérieur ;
■ blocage de ladite portion de film (15) par rapport à l'outil supérieur (14) ;
■ engagement d'une bande transversale supplémentaire du film disposé, en référence au sens d'avancement (B) du film, en amont de la portion de film (15) positionnée en-dessous de l'outil supérieur (14) ;
- saisie de l'outil inférieur et de l'outil supérieur en un état approché ;
- fixation de manière ferme de la portion de film (15) à un ou plusieurs supports (2) sous-jacents ;
- découpe du film (16) afin de séparer la portion de film (15) positionnée en-dessous de l'outil supérieur par rapport à la bande transversale (16a) supplémentaire du film.

13. Procédé selon la revendication 12, le sens d'avancement (A) des supports (2) étant parallèle au sens d'avancement (B) dudit film (16), l'étape de découpe du film étant effectuée par un dispositif de coupe (31) mobile le long d'un plan s'étendant transversalement, particulièrement perpendiculaire, audit sens d'avancement (B) dudit film.

14. Procédé selon la revendication 12 ou 13, comprenant une étape de blocage de la portion de film (15) au niveau de l'outil supérieur (14) par un élément d'arrêt (33), une telle étape de blocage permettant de maintenir la portion de film (15) en-dessous de l'outil supérieur (14) et en contact avec la surface de butée (14b) dudit outil supérieur (14),
le procédé comprenant au moins l'une des étapes suivantes :
- d'élimination du gaz de la chambre d'emballage (17), comprenant les sous-étapes suivantes :
∘ le fait de porter en contact l'élément d'arrêt (33) avec l'outil supérieur afin de bloquer la portion de film au niveau dudit outil supérieur,
∘ vde disposition des outils supérieur et inférieur dans l'état approché auquel ladite chambre d'emballage est définie,
∘ d'aspiration de gaz dans la chambre d'emballage (17) à travers un canal (41) constitué sur l'élément d'arrêt (33),
- d'injection de gaz dans la chambre d'emballage, comprenant les sous-étapes suivantes :
∘ le fait de porter en contact l'élément d'arrêt (33) avec l'outil supérieur afin de bloquer la portion de film au niveau dudit outil supérieur,
∘ de disposition des outils supérieur et inférieur dans l'état approché auquel ladite chambre d'emballage est définie,
∘ d'injection de gaz dans la chambre d'emballage (17) à travers un canal (41) constitué sur l'élément d'arrêt (33),
et l'étape de fixation de manière étroite de la portion de film (15) au support (2) afin de former un emballage fini comprenant :
- la fermeture dudit canal (41),
- le fait de porter en contact et de thermosceller étroitement au moins un bord dans le périmètre de la portion de film (15) à la collerette ou au bord dans le périmètre du support (2).
